(19) Europäisches Patentamt / European Patent Office / Office européen des brevets

(11) **EP 4 124 901 A1**

(12) **EUROPEAN PATENT APPLICATION**

(43) Date of publication:
**01.02.2023 Bulletin 2023/05**

(21) Application number: **21306059.3**

(22) Date of filing: **29.07.2021**

(51) International Patent Classification (IPC):
***G02C 7/04*** $^{(2006.01)}$ ***G02C 7/10*** $^{(2006.01)}$

(52) Cooperative Patent Classification (CPC):
**G02C 7/04; C09K 11/02; C09K 11/883; G02B 5/206; G02C 7/10**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nexdot**
**93230 Romainville (FR)**

(72) Inventors:
- **D'AMICO, Michele**
  **93230 Romainville (FR)**
- **CAO, Edgar**
  **93230 Romainville (FR)**
- **NAUDIN, Guillaume**
  **93230 Romainville (FR)**
- **DUBERTRET, Benoît**
  **93230 Romainville (FR)**

(74) Representative: **Icosa**
**83 avenue Denfert-Rochereau**
**75014 Paris (FR)**

(54) **CONTACT LENS COMPRISING SEMI-CONDUCTIVE NANOPARTICLES**

(57) The present invention relates to a contact lens, comprising:
a. at least one polymeric matrix; and
b. semi-conductive nanoparticles which are dispersed in said polymeric matrix;
wherein the absorbance through a layer of said contact lens is higher than 0.5 for each light wavelength ranging from 350 nm to $\lambda_{cut}$, $\lambda_{cut}$ being in the visible range, preferably in the range from 400 nm to 480 nm, said layer having a thickness ranging from 50 $\mu$m to 250 $\mu$m.

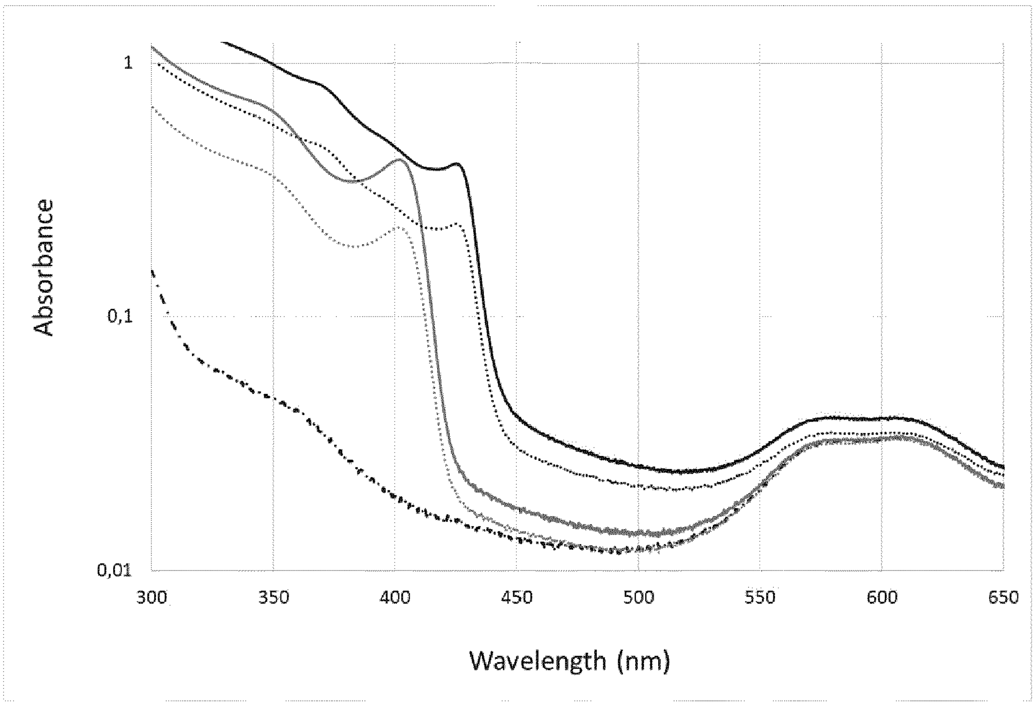


**FIG. 4**



Processed by Luminess, 75001 PARIS (FR)

## Description

## FIELD OF INVENTION

The present invention relates to the field of contact lenses, in particular contact lenses comprising semi-conductive nanoparticles with specific light absorbing properties. The disclosure also relates to a polymerizable liquid composition for the manufacture of such contact lenses and a process for the manufacturing of such contact lenses.

## BACKGROUND OF INVENTION

Light that reaches human eye comprises visible light, in wavelength range from about 380 to 780 nm, and non-visible light, which includes light in the ultraviolet range (UV-A and UV-B light from about 280 to 380 nm) and the infrared range (Near IR light from about 780 to 1400 nm).

UV light is known to be harmful to the human eye. In particular, it can induce ocular ageing which can lead to an early cataract or to more extreme disorders such as photokeratitis.

Blue light, also known as high-energy visible (HEV) light, corresponds to visible light in the blue-violet band between 380 and 500 nm. Prolonged exposure to blue light emitted from digital devices such as television, laptops, tablets and smartphones and fluorescent and LED lighting is harmful as blue light is able to reach the retina. Some specific ranges of blue light have been shown to cause photoretinitis; digital eyestrain, or computer vision syndrome which includes blurry vision, difficulty focusing, dry and irritated eyes, headaches, neck and back pain; disruption of the circadian rhythm; decreased melanin production; age-related macular degeneration; glaucoma; retinal degenerative diseases; breast and prostate cancer; diabetes; heart disease; obesity and depression. Blue light in the range from about 410 to 440 nm is believed to be especially harmful.

Damages from UV light and blue light can be prevented by incorporating adapted light-absorbers in contact lenses. Usually, several additives are used, each absorber being efficient over a limited wavelength range.

A known method to prepare light-absorbing contact lenses consists in the addition of UV-absorber polymers in the bulk liquid formulation (*i.e.* before polymerization). Generally, lenses obtained by this method are prone to undesirable yellowing due to degradation of the light-absorber during polymerization and/or upon ageing.

Yellowing of the lens is undesirable for cosmetic reasons and because it can affect the colour perception of the wearer of lenses and eventually lower the transmittance of lenses.

There is thus a need for contact lenses comprising a light-absorber, the light-absorber being not affected during polymerization and providing with a well-defined absorbance spectrum able to protect eye against high energy radiations and optimize colour perception.

The Applicant has found that this need could be met with contact lenses comprising semi-conductive nanoparticles dispersed in a polymeric matrix.

## SUMMARY

The present invention relates to a contact lens, comprising:

a. at least one polymeric matrix; and
b. semi-conductive nanoparticles which are dispersed in said polymeric matrix;

wherein the absorbance through a layer of said contact lens is higher than 0.5 for each light wavelength ranging from 350 nm to $\lambda_{cut}$, $\lambda_{cut}$ being in the visible range, preferably in the range from 400 nm to 480 nm, said layer having a thickness ranging from 50 $\mu$m to 250 $\mu$m.

In one embodiment, the absorbance through a layer of said contact lens is higher than 0.5 for each light wavelength ranging from 350 nm to $\lambda_{cut}$, $\lambda_{cut}$ being in the visible range, preferably in the range from 400 nm to 480 nm, said layer having a thickness of 150 $\mu$m. In one embodiment, the polymeric matrix is obtained by polymerization of at least one monomer in presence of at least one catalyst for initiating the polymerization of said monomer. In one embodiment, the polymeric matrix is a molded polymer. In one embodiment, the polymeric matrix is a flexible material such that said contact lens is a soft contact lens. In one embodiment, said contact lens has at least one of the following features:

- an $O_2$ permeability ranging from 20 x $10^{-11}$ to 150 x $10^{-11}$ ($cm^2$/s) (ml $O_2$/ml x mmHg);
- an average center thickness ranging from 20 $\mu$m to 500 $\mu$m;
- a diameter ranging from 5 mm to 20 mm; and/or
- a base curve ranging from 5 mm to 15 mm.

In one embodiment, the polymeric matrix comprises an acrylate polymer, a vinylic polymer, a polyoxyethylene polyol, a polyvinyl carbonate, a polyvinyl carbamate, or a polyoxazolone. In one embodiment, the acrylate polymer is selected among polyhydroxyethylmethacrylate, polymethylmethacrylate, poly(ethylene glycol) methacrylate, poly N-dimethyl acrylamide, poly(glycerol methacrylate), polyethyleneglycol dimethacrylate, polytetraethyleneglycol dimethacrylate, poly (2-hydroxyethyl methacrylamide), poly (acrylic acid), poly (methacrylic acid), poly (meth) acrylamide, or poly (acrylamide), poly(ethylene glycol) acrylate, poly di(ethylene glycol) ethyl ether acrylate, neopentyl glycol propoxylate diacrylate, poly(ethylene glycol) diacrylate, poly (pentaerythritol tetraacrylate), or mixture thereof. In one embodiment, the polymeric matrix comprises a silicone hydrogel. In one embodiment, the semi-conductive nanoparticles comprise a material of formula

$$M_xQ_yE_zA_w \qquad (I),$$

wherein:

M is selected from the group consisting of Zn, Cd, Hg, Cu, Ag, Au, Ni, Pd, Pt, Co, Fe, Ru, Os, Mn, Tc, Re, Cr, Mo, W, V, Nd, Ta, Ti, Zr, Hf, Be, Mg, Ca, Sr, Ba, Al, Ga, In, Tl, Si, Ge, Sn, Pb, As, Sb, Bi, Sc, Y, La, Ce, Pr, Nd, Sm, Eu, Gd, Tb, Dy, Ho, Er, Tm, Yb, Cs or a mixture thereof;
Q is selected from the group consisting of Zn, Cd, Hg, Cu, Ag, Au, Ni, Pd, Pt, Co, Fe, Ru, Os, Mn, Tc, Re, Cr, Mo, W, V, Nd, Ta, Ti, Zr, Hf, Be, Mg, Ca, Sr, Ba, Al, Ga, In, Tl, Si, Ge, Sn, Pb, As, Sb, Bi, Sc, Y, La, Ce, Pr, Nd, Sm, Eu, Gd, Tb, Dy, Ho, Er, Tm, Yb, Cs or a mixture thereof;
E is selected from the group consisting of O, S, Se, Te, C, N, P, As, Sb, F, Cl, Br, I, or a mixture thereof;
A is selected from the group consisting of O, S, Se, Te, C, N, P, As, Sb, F, Cl, Br, I, or a mixture thereof; and
x, y, z and w are independently a decimal number from 0 to 5; x, y, z and w are not simultaneously equal to 0; x and y are not simultaneously equal to 0; z and w may not be simultaneously equal to 0.

In one embodiment, the semi-conductive nanoparticles are nanospheres, nanoplates or nanorods. In one embodiment, the semi-conductive nanoparticles are core/shell particles or core/crown particles, the core being a different material from the shell or crown. In one embodiment, the amount of semi-conductive nanoparticles in the contact lens is from 10 ppm to 10 wt%, based on the weight of the contact lens. In one embodiment, the semi-conductive nanoparticles are capped with an organic layer or encapsulated in an inorganic matrix.

The present invention also relates to a polymerizable composition for the manufacture of a contact lens, comprising:

a. at least one monomer;
b. at least one catalyst for initiating the polymerization of said monomer; and
c. semi-conductive nanoparticles which are dispersed in said monomer.

wherein the absorbance through a layer of said contact lens is higher than 0.5 for each light wavelength ranging from 350 nm to $\lambda_{cut}$, $\lambda_{cut}$ being in the visible range, preferably in the range from 400 nm to 480 nm, said layer having a thickness ranging from 50 $\mu$m to 250 $\mu$m.

The present invention also relates to a process for the manufacturing of the contact lens according to the invention, comprising the steps of:

a. providing a monomer;
b. providing semi-conductive nanoparticles in the form of a powder dispersible within said monomer or in the form of a dispersion of said semi-conductive nanoparticles in a liquid dispersible within said monomer;
c. providing a catalyst for initiating the polymerization of said monomer; and
d. mixing said monomer, said semi-conductive nanoparticles and said catalyst so as to obtain a polymerizable composition;
e. curing said polymerization composition.

**DEFINITIONS**

In the present invention, the following terms have the following meanings:

- **"Absorbance"** is the decimal logarithm of ratio $I_0/I$, where $I_0$ is the intensity of light incident on a sample and I is the intensity of light transmitted through said sample. In this disclosure, absorbance is measured for a 150-micrometer thick sample. Absorbance is measured for wavelengths in UV and visible range from 350 nm to 780 nm.

- **"Base Curve"** refers to the radius of the back of the contact lens. It is the primary curve of the contact lens that is designed to match the contour of the central cornea. It should correspond to the curvature of the eye of the wearer as it defines how well the contact lens will sit on the eye of said wearer. It represents how curved a contact lens is, the highest the base curve is, the flattest is the contact lens.

- **"Center thickness"** refers to the thickness of the contact lens at its geometric center. The center thickness determines both $O_2$ permeability and stability of the contact lens. For example, a thin contact lens has a greater $O_2$ permeability, allowing a greater amount of $O_2$ to reach the cornea.

- **"Core/crown"** refers to a heterostructure in which a central nanoparticle: the core, is surrounded by a band of material disposed on the periphery of the core: the crown.

- **"Core/shell"** refers to a heterostructure in which a central nanoparticle: the core, is embedded by a layer of material disposed on the core: the shell. Two successive shells may be laid, yielding core/shell/shell heterostructure. Core and shell may have the same shape, for instance core is a nanosphere and shell is a layer of essentially constant thickness yielding a spherical core/shell nanoparticle. Core and shell may have different shapes, for instance a dot - a nanosphere or a nanocube or any other nanocluster - is provided as a core and shell is grown laterally around the core, yielding an heterostructure with shape of a nanoplate but comprising a dot inside the nanoplate: the latter is named dot in plate thereafter. In some embodiments, core and shell have different compositions. In other embodiments composition varies continuously from core to shell: there is no precise boundary between core and shell but properties in centre of the core are different from properties on the outer boundary of shell.

- **"Hydrophilic"** refers to a substance, for example a monomer or a polymer, that has an affinity for water. Hydrophilic compounds have an affinity to water and are usually charged or have polar moieties or groups that attract water. A hydrophilic polymer is not necessarily soluble in water.

- **"Nanometric size"** refers to a size of matter in which quantum effects appear due to confinement. For semi-conductive nanoparticles, nanometric size has to be defined with the average Bohr radius of an electron/hole pair. Confinement is effective for size in at least one dimension of the object below 20 nm, preferably below 15 nm, more preferably below 10 nm. The stronger confinements are obtained with a size in at least one dimension below 5 nm.

- **"Nanoparticle"** refers to a particle having a size in at least one of its dimensions below 100 nm. For a nanosphere, diameter should be below 100 nm. For a nanoplate, thickness should be below 100 nm. For a nanorod, diameter should be below 100 nm.

- **"Nanoplate"** refers to a 2D shaped nanoparticle, wherein the smallest dimension of said nanoplate is smaller than the largest dimension of said nanoplate by a factor (aspect ratio) of at least 1.5, at least 2, at least 2.5, at least 3, at least 3.5, at least 4, at least 4.5, at least 5, at least 5.5, at least 6, at least 6.5, at least 7, at least 7.5, at least 8, at least 8.5, at least 9, at least 9.5 or at least 10.

- **"Sagittal depth"** refers to the vertical depth of a contact lens, *i.e.* the depth of the entire contact lens from the center of the lens to the plane that the edges circumscribe.

- **"Semi-conductive nanoparticles"** refers to particles made of a material having an electronic structure corresponding to semi-conductive materials known in electronic industry but having a **nanometric size.** Due to their specific electronic structure, semi-conductive materials behave as high-pass absorbing materials. Indeed, light having a wavelength more energetic than band gap may be absorbed by the semi-conductive material, yielding an electron/hole pair, an exciton, which later recombine in the material and dissipate heat, or emit light, or both. On the contrary, light having a wavelength less energetic than band gap cannot be absorbed: semi-conductive material is transparent for these wavelengths. In macroscopic semi-conductive materials, visible light is generally absorbed while near/mid infra-red light is not absorbed. When semi-conductive particles have a **nanometric size,** confinement - *i.e.* shape and nanometric size - governs electronic structure following the rules of quantum mechanics and light absorption may be limited to UV range or UV and high energy visible light. Within this disclosure, **semi-conductive nanoparticles** absorb light having a wavelength below a threshold, this threshold being in the range of 350 nm - 800 nm.

- "**Silicone-containing monomer**" refers to a monomer comprising at least two [-Si-O-] repeating units. Preferably, the total Si and attached O are present in the silicone-containing monomer in an amount greater than 20 weight

percent, and more preferably greater than 30 weight percent of the total molecular weight of the silicone-containing monomer.

## DETAILED DESCRIPTION

This invention relates to a contact lens, comprising:

a. at least one polymeric matrix; and
b. semi-conductive nanoparticles which are dispersed in said polymeric matrix.

The absorbance through a layer of said contact lens is higher than 0.5 for each light wavelength ranging from 350 nm to $\lambda_{cut}$, $\lambda_{cut}$ being in the visible range, preferably in the range from 400 nm to 480 nm, said layer having a thickness ranging from 50 μm to 250 μm.

Preferably, the absorbance through a layer of said contact lens is higher than 0.5 for each light wavelength ranging from 350 nm to $\lambda_{cut}$, $\lambda_{cut}$ being in the visible range, preferably in the range from 400 nm to 480 nm, said layer having a thickness of 150 μm.

The amount of semi-conductive nanoparticles in the contact lens may be from 10 ppm to 10% by weight, in particular from 10 ppm to 1% by weight, in particular from 20 ppm to 0.5% by weight, more particularly from 25 ppm to 0.25% by weight, based on the total weight of the contact lens. In this disclosure, the organic material that is used to cap semi-conductive nanoparticles or the material that is used to encapsulate semi-conductive nanoparticles is not included in the amount of semi-conductive nanoparticles. For the sake of clarity, if the optical active aggregates are formed by 30% weight of semi-conductive nanoparticles embedded in 70% weight of surrounding mineral matrix, a contact lens comprising 1% weight of said aggregates of will globally comprises 0.3% weight of semi-conductive nanoparticles, based on the total weight of said contact lens.

This embodiment can also be formulated as follows: the amount of semi-conductive nanoparticles in the polymeric matrix may be from 10 ppm to 10% by weight, in particular from 10 ppm to 1% by weight, in particular from 20 ppm to 0.5% by weight, more particularly from 25 ppm to 0.25% by weight, based on the total weight of the polymeric matrix. In this disclosure, the organic material that is used to cap semi-conductive nanoparticles or the material that is used to encapsulate semi-conductive nanoparticles is not included in the amount of semi-conductive nanoparticles. For the sake of clarity, if the optical active aggregates are formed by 30% weight of semi-conductive nanoparticles embedded in 70% weight of surrounding mineral matrix, a contact lens comprising 1% weight of said aggregates of will globally comprises 0.3% weight of semi-conductive nanoparticles, based on the total weight of said contact lens.

In an embodiment, the amount of polymeric matrix in the contact lens may be from 90% to 99.99% by weight, in particular from 95% to 99.99% by weight, more in particular from 99% to 99.5% by weight, based on the total weight of the contact lens.

According to one embodiment, the contact lens has an oxygen permeability *Dk* ranging from 20 x $10^{-11}$ to 150 x $10^{-11}$ ($cm^2$/s) (ml $O_2$/ml x mmHg), from 50 x $10^{-11}$ to 120 x $10^{-11}$ ($cm^2$/s) (ml $O_2$/ml x mmHg). The oxygen permeability was measured according to ISO 9913-1 standard. Oxygen permeability is a parameter of a contact lens that expresses the ability of the lens to let oxygen molecules reach the eye by diffusion. In soft contact lenses, it is dependent on the thickness of the lens and the material of the lens.

According to one embodiment, the contact lens has an average center thickness ranging from 20 μm to 500 μm, from 30 μm to 300 μm, preferably from 50 μm to 250 μm, more preferably from 80 μm to 180 μm. In particular, a contact lens destined to extended wear should have an average center thickness ranging from 30 μm to 100 μm. A contact lens should be thin enough to allow sufficient oxygen permeability.

According to one embodiment, the contact lens has a sagittal depth ranging from 100 μm to 500 μm, more preferably from 150 μm to 250 μm.

According to one embodiment, the contact lens has a diameter ranging from 5 mm to 20 mm, in particular from 13 mm to 15 mm.

According to one embodiment, the contact lens has a base curve ranging from 5 mm to 15 mm, in particular from 8 mm to 10 mm, in particular from 8 mm to 9 mm.

According to one embodiment, the contact lens has a water content ranging from 20% to 75%, preferably from 25% to 60%, more preferably from 30% to 45%.

According to one embodiment, the contact lens has a water content of at least about 25% or at least about 30% or at least about 35% or at least about 40% or at least about 50% or more. A contact lens with lower water content would not be comfortable to wear.

According to one embodiment, the contact lens is spherical, aspheric, bifocal, multifocal, or toric.

According to one embodiment, the contact lens is a therapeutic contact lens, *i.e.* a contact lens for ophthalmic correction, or a cosmetic contact lens such as for example a colored lens offering no ophthalmic correction.

*Polymeric matrix*

Polymers suitable for contact lenses may be classified in various chemical classes.

According to one embodiment, the polymeric matrix is obtained by polymerization of at least one monomer in presence of at least one catalyst for initiating the polymerization of said monomer.

According to one embodiment, the polymeric matrix is a molded polymer.

According to one embodiment, the polymeric matrix is a hydrophilic polymer.

According to one embodiment, the polymeric matrix is a flexible material such that said contact lens is a soft contact lens.

According to one embodiment, the polymeric matrix comprises an acrylate polymer, a vinylic polymer, a polyoxyethylene polyol, a polyvinyl carbonate, a polyvinyl carbamate, a polyoxazolone, or a mixture thereof.

In a specific configuration of this embodiment, the acrylate polymer is selected among HEMA (poly hydroxyethylmethacrylate), PMMA (polymethylmethacrylate), PEGMA (poly(ethylene glycol) methacrylate), PDMA (poly N-dimethyl acrylamide), poly(glycerol methacrylate), EGDMA (poly ethyleneglycol dimethacrylate), TEGDMA (poly tetraethyleneglycol dimethacrylate), poly (2-hydroxyethyl methacrylamide), poly (acrylic acid), poly (methacrylic acid), poly (meth) acrylamide, or poly (acrylamide), PEGA (poly(ethylene glycol) acrylate), DEGEEA (poly di(ethylene glycol) ethyl ether acrylate), NGPD (neopentyl glycol propoxylate diacrylate), PEGDA (poly(ethylene glycol) diacrylate), PETA (poly (pentaerythritol tetraacrylate)), or mixture thereof.

In a specific configuration of this embodiment, the vinylic polymer is selected among N-PVP (N-polyvinyl polypyrrolidone), poly(N-vinyl lactam), poly(N-vinyl-N-methyl acetamide), poly(N-vinyl-N-ethyl acetamide), poly(N-vinyl-N-ethyl formamide), poly(N-vinyl formamide).

Examples of polyvinyl carbamate include TPVC (tris-(trimethyl siloxysilyl) propylvinyl carbamate), NCVE (N-carboxyvinyl ester), PBVC (poly-(dimethysiloxy)di-(silylbutanol) bis-(vinyl carbamate)).

In a specific configuration of this embodiment, the polyoxyethylene polyol has one or more of the terminal hydroxyl groups replaced with a functional group containing a polymerizable double bond. Examples include polyethylene glycol, ethoxylated alkyl glucoside, and ethoxylated bisphenol A reacted with one or more molar equivalents of an end-capping group such as isocyanatoethyl methacrylate, methacrylic anhydride, methacryloyl chloride, vinylbenzoyl chloride, or the like, to produce a polyethylene polyol having one or more terminal polymerizable olefinic groups bonded to the polyethylene polyol through linking moieties such as carbamate or ester groups.

More preferred hydrophilic polymers include polymers issued from the polymerization of DMA (N-dimethyacrylamide), HEMA. glycerol methacrylate, 2-hydroxyethyl methacrylamide, N-vinyl pyrrolidone, polyethyleneglycol monomethacrylate, methacrylic acid and acrylic acid with DMA.

According to one embodiment, the polymeric matrix comprises a silicone hydrogel. A hydrogel is a hydrated crosslinked polymeric system that contains water in an equilibrium state. Hydrogels typically are oxygen permeable and biocompatible, making them materials of choice for producing contact lenses. Silicone hydrogels have higher $O_2$ permeability than conventional hydrogels, particularly suitable for producing long wear contact lenses.

In this embodiment, the silicone hydrogel is obtained by polymerization of a silicone-containing monomer.

In a specific configuration, said silicone-containing monomer may have one of the following formulas:

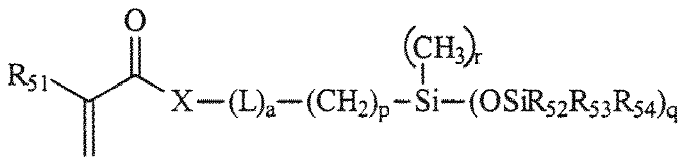

(II)

wherein $R_{51}$ is H or $CH_3$, q is 1 or 2 and for each q, $R_{52}$, $R_{53}$ and $R_{54}$ are independently an alkyl or an aromatic, preferably ethyl, methyl, benzyl, phenyl, or a monovalent siloxane chain comprising from 1 to 100 repeating Si-O units, p is 1 to 10, r = (3-q), X is O or $NR_{55}$, where $R_{55}$ is H or a monovalent alkyl group with 1 to 4 carbons, a is 0 or 1, and L is a divalent linking group which preferably comprises from 2 to 5 carbons, which may also optionally comprise ether or hydroxyl groups, for example, a polyethylene glycol chain; or

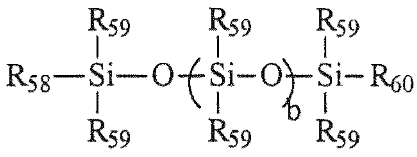

(III)

where b = 0 to 100, preferably 8 to 10; $R_{58}$ is a monovalent group containing an ethylenically unsaturated moiety, preferably a monovalent group containing a styryl, vinyl, or methacrylate moiety, more preferably a methacrylate moiety; each $R_{59}$ is independently a monovalent alkyl, or aryl group, which may be further substituted with alcohol, amine, ketone, carboxylic acid or ether groups, preferably unsubstituted monovalent alkyl or aryl groups, more preferably methyl; and $R_{60}$ is a monovalent alkyl, or aryl group, which may be further substituted with alcohol, amine, ketone, carboxylic acid or ether groups, preferably unsubstituted monovalent alkyl or aryl groups, preferably a $C_{1\ 10}$ aliphatic or aromatic group which may include hetero atoms, more preferably $C_{3-8}$ alkyl groups, most preferably butyl, particularly sec-butyl group.

In a preferred configuration of this embodiment, the silicone hydrogel results from the polymerization of a mixture comprising at least one monomer of formula II and at least one monomer of formula III. The use of the silicone-containing monomers of formula II and/or formula III in a silicone hydrogel reduces the Young's modulus of the hydrogel, making them particularly suitable for producing soft contact lenses. In particular, this improves comfort of the wearer.

In an embodiment, the silicone-containing monomer comprises polymerizable functional groups such as vinyl, acrylate, methacrylate, acrylamide, methacrylamide, N-vinyl lactam, N-vinylamide, or styryl functional groups.

In an embodiment, the silicone-containing monomer is selected among methacryloxypropylbis (trimethylsiloxy) methylsilane, methacryloxypropylpentamethyldisiloxane, methyldi (trimethylsiloxy) methacryloxymethyl silane, methyldi (trimethylsiloxy) sylylpropylglycerolethyl methacrylate monomethacryloxypropyl terminated polydimethylsiloxane, pentamethyldisiloxanyl methylmethacrylate, (3-methacryloxy-2hydroxypropyloxy) propylbis (trimethylsiloxy) methylsilane, linear mono-alkyl terminated polydimethylsiloxane (mPDMS), 3-methacryloxy-2 -hydroxypropyloxy) propylbis (trimethylsiloxy) methylsilane, w-bismethacryloxy-propyl polydimethylsiloxane, 1,3-bis [4 - (vinyl oxycarbonyloxy)but-l-yl] tetramethylisiloxane 3 -(vinyloxycarbonylthio) propyl- [tris (trimethylsiloxysilane], 3 -[tris (trimethylsiloxy) silyl] ropyl allyl carbamate, 3 -[tris (trimethylsiloxy) silyl] ropyl vinyl carbamate; trimethylsilylethyl vinyl carbonate, trimethylsilylmethyl vinyl carbonate, hydroxyalkylamine-functional silicone-containing monomer.

Concerning mPDMS based silicone hydrogels, such a silicone hydrogel preferably comprises between about 2% and 70% by weight of mPDMS, preferably between 4% and 50% by weight of mPDMS, more preferably from 8% to 40% by weight of mPDMS, based on total weight of monomers from which the silicone hydrogel is made. These amounts of mPDMS in a silicone hydrogel reduces the Young's modulus of the silicone hydrogel, making them particularly suitable for producing soft contact lenses.

In an embodiment, the silicone hydrogel results from the polymerization of a mixture comprising at least one monomer containing silicone and at least one hydrophilic silicone free monomer.

In this embodiment, the at least one hydrophilic silicone free monomer is chosen among: mPDMS, methacryloxypropyltris- (trimethylsiloxy) silane, methyl methacrylate, HEMA, DMA, 2-hydroxyethyl acrylate, glycerol methacrylate, ethylene glycol methyl ether methacrylate, methacrylonitrile, ethyl methacrylate, butyl methacrylate, 2-hydroxypropyl-1-methacrylate, 2-hydroxyethyl methacrylamide, methacrylic acid, N-vinyl-N-methyl acetamide (VMA), N-vinyl -N-ethyl acetamide, N-vinyl-N-ethyl formamide, N-vinyl formamide, N-2 -hydroxy ethylvinyl carbamate, N-carboxy- β-alanine N-vinyl ester.

In this embodiment, the total silicone-free monomer can be from 20% by weight to 75% by weight, or from 35% by weight to 65% by weight, or from 40% by weight to 60% by weight, based on the total weight of the mixture.

In an embodiment, the polymeric matrix may further comprise additives in conventional proportions. These additives include stabilizers such as antioxidants, UV light absorbers, light stabilizers, anti-yellowing agents, adhesion promoters, dyes, photochromic agents, pigments, rheology modifiers, lubricants, cross-linking agents, photo-initiators fragrances and pH regulators. They should neither decrease the effectiveness of polymerization nor deteriorate optical properties of the contact lens.

The polymeric matrix may also comprise colour balancing agents. Such additives are intended to lower the residual colour of contact lenses. Typically, dyes and/or pigments are used as colourants. These colourants being absorbent in the complementary colour of blue, a low coloured contact lens is obtained, at the expense of a lowering of lightness. Indeed, contact lens will appear slightly grey, *i.e.* not coloured.

*Semi-conductive nanoparticles*

Materials may have various compositions and structures. Among mineral materials, some are electrically conductive, for instance metals. Some are electrically insulating, such as silicon oxide or tin oxide. Of particular interest in this disclosure are materials made of semi-conductive materials, well known in electronic industry. Semi-conductive materials may have a macroscopic size. If semi-conductive materials have a nanometric size, their electronic and optical properties are modified.

*Absorbance*

In this disclosure, semi-conductive nanoparticles bring especially interesting light absorbing properties to contact lenses comprising them. In particular, with proper selection of composition and structure of semi-conductive nanoparticles, light absorbers having a sharp transition between range of absorbed light (of high energy) and range of transmitted light (low energy) may be designed. Semi-conductive nanoparticles absorb light having a wavelength below a threshold, this threshold being in the range of 350 nm - 800 nm.

Figure 1.1 shows the generic absorbance curve of a contact lens comprising semi-conductive nanoparticles as a function of wavelength of light from 350 nm to 780 nm: $A(\lambda)$. The absorbance curve presents three zones. In low wavelength area, *i.e.* in UV light and high energy visible light, absorbance is high and/or is roughly constant, defining a first plateau $P_1$ with an average absorbance $A_1$. After first plateau $P_1$, absorbance decreases sharply to reach a value A2 of a tenth of $A_1$: $A_2 = A_1/10$, thus defining a decreasing zone D. The limit between plateau $P_1$ and decreasing zone D defines the wavelength of transition $\lambda_{cut}$. After the decreasing zone D, absorbance may decrease and/or stabilize in a second plateau $P_2$, extending up to red end of visible light, namely 780 nm.

The width of decreasing zone D is generally less than 100 nm, preferably less than 50 nm, more preferably less than 40 nm, even preferably less than 30 nm.

While absorbance curves always have this generic shape, details vary with the nature of materials used and exact determination of $\lambda_{cut}$ may be difficult.

In some embodiments, absorbance curve shows a clear maximum at the limit of $P_1$, and D, as shown on Figure 1.1. In this embodiment, $\lambda_{cut}$ may be defined by the following formula, where $\lambda_{cut}$ is in the decreasing zone D:

$$A(\lambda_{cut}) = \frac{\int_{350}^{\lambda_{cut}} A(\lambda)d\lambda}{\lambda_{cut}-350}$$

In this embodiment, $\lambda_{cut}$ may be defined alternatively by the following formula for a local maximum:

$$\left.\frac{\partial \log A}{\partial \lambda}\right)_{\lambda_{cut}} = 0$$

In other embodiments, absorbance curve is monotonously decreasing slowly before decreasing sharply, as shown on Figure 1.2. In this embodiment, $\lambda_{cut}$ may be defined by the lowest value of $\lambda$ where decrease of absorbance become significant in decreasing zone, for instance where:

$$\frac{\partial \log A}{\partial \lambda} < -0{,}01$$

The different determinations of $\lambda_{cut}$ proposed above give different but near values. In this disclosure, a value of $\lambda_{cut}$ has to be considered as a rounded value with uncertainty of $\pm$ 5 nm.

The value of $\lambda_{cut}$ may be selected within UV or visible light range by a proper selection of semi conductive nanoparticles composition, shape and structure.

Absorbance of a contact lens is measured on a 150 $\mu$m-thick layer of said contact lens comprising semi-conductive nanoparticles. In an embodiment, absorbance is higher than 0.5, preferably 1, more preferably 1.5 for each light wavelength ranging from 350 nm to $\lambda_{cut}$. $\lambda_{cut}$ may be in the visible range, preferably in the range from 400 nm to 500 nm, from 400 nm to 460 nm, from 400 nm to 430 nm, from 460 nm to 500 nm, or from 460 nm to 480 nm.

In one embodiment, absorbance of the contact lens has:

- a local maximum absorbance of highest wavelength in the range from 350 nm to 500 nm, said local maximum having

an absorbance value $A_{max}$ for a wavelength $\lambda_{max}$,

- a value of $0.9A_{max}$ for a wavelength $\lambda_{0.9}$, $\lambda_{0.9}$ being greater than $\lambda_{max}$;
- a value of $0.5A_{max}$ for a wavelength $\lambda_{0.5}$, $\lambda_{0.5}$ being greater than $\lambda_{0.9}$; and wherein $|\lambda_{0.5} - \lambda_{0.9}|$ is less than 15 nm.

In a preferred configuration, $|\lambda_{0.5} - \lambda_{0.9}|$ is less than 10 nm, or less than 5 nm.

In an embodiment, absorbance of the contact lens has a value of $0.1A_{max}$ for a wavelength $\lambda_{0.1}$, $\lambda_{0.1}$ being greater than $\lambda_{0.9}$; and wherein $|\lambda_{0.1} - \lambda_{0.9}|$ is less than 30 nm, preferably less than 20 nm, more preferably less than 10 nm.

Contact lenses should have specific optical properties. In particular, contact lenses must be transparent. By transparent, it is meant two properties. First, light scattering by contact lenses should be low, typically below 1% as measured with standard haze measurement according to ASTM D1003- 00, preferably below 0.8%, even preferably below 0.5%. Second, the shape of an object seen throughout a contact lens should be unaltered, in the sense that the wearer of said contact lenses can recognize an object when looking through them. In this disclosure, transparency is not related to the absorbance of visible light. In other words, a contact lens may be transparent and coloured.

In this disclosure, contact lenses comprise semi-conductive nanoparticles. Hence, contact lenses show absorbance of light. Absorbance for a contact lens is defined for a 150 μm-thick sample comprising semi-conductive nanoparticles.

Then, contact lenses behave as high pass filters: absorbance is high for wavelength of high energy, *i.e.* short wavelengths. On the contrary, absorbance for wavelength of low energy, *i.e.* long wavelengths, is low. The transition between both domains of high and low absorbance may be defined by the wavelength $\lambda_{cut}$ for which absorbance is higher than 0.5, preferably 1, more preferably 1.5 for each light wavelength ranging from 350 nm to $\lambda_{cut}$.

By proper selection of semi-conductive nanoparticles, $\lambda_{cut}$ may be selected in the UV-visible range, *i.e.* between 350 nm and 780 nm. In an embodiment, $\lambda_{cut}$ is in the visible range, *i.e.* between 380 nm and 780 nm.

In a particular embodiment, $\lambda_{cut}$ is in the blue part of visible range, *i.e.* between 400 nm and 480 nm, allowing for attenuation of blue light. Such contact lenses are particularly suitable for night drivers, as blue light emitted by car headlamps is becoming increasingly rich in blue light which is strongly scattered. Such contact lenses are also particularly suitable for intense users of digital devices, *i.e.* computers, smartphones and more generally devices with a digital display; as blue light emitted by displays is now suspected to be source of various troubles including circadian rhythm alterations and age-related macular degeneration inter alia.

In another particular embodiment, $\lambda_{cut}$ is in the yellow-green part of visible range, *i.e.* between 480 nm and 600 nm, allowing for attenuation of blue and yellow light. Such contact lenses are particularly suitable for elderly people, who are usually very sensitive to central green spectrum of daylight. Such contact lenses are also particularly suitable for colour-blind people: a proper selection of $\lambda_{cut}$ between the sensitivity peaks of green and red colours, for instance about 580 nm, allows to restore colour disambiguation.

*Composition*

In one embodiment, the semi-conductive nanoparticles comprise a material of formula

$$M_xQ_yE_zA_w \qquad (I)$$

in which M is selected from the group consisting of Zn, Cd, Hg, Cu, Ag, Au, Ni, Pd, Pt, Co, Fe, Ru, Os, Mn, Tc, Re, Cr, Mo, W, V, Nd, Ta, Ti, Zr, Hf, Be, Mg, Ca, Sr, Ba, Al, Ga, In, Tl, Si, Ge, Sn, Pb, As, Sb, Bi, Sc, Y, La, Ce, Pr, Nd, Sm, Eu, Gd, Tb, Dy, Ho, Er, Tm, Yb, Cs or a mixture thereof; Q is selected from the group consisting of Zn, Cd, Hg, Cu, Ag, Au, Ni, Pd, Pt, Co, Fe, Ru, Os, Mn, Tc, Re, Cr, Mo, W, V, Nd, Ta, Ti, Zr, Hf, Be, Mg, Ca, Sr, Ba, Al, Ga, In, Tl, Si, Ge, Sn, Pb, As, Sb, Bi, Sc, Y, La, Ce, Pr, Nd, Sm, Eu, Gd, Tb, Dy, Ho, Er, Tm, Yb, Cs or a mixture thereof; E is selected from the group consisting of O, S, Se, Te, C, N, P, As, Sb, F, Cl, Br, I, or a mixture thereof; and A is selected from the group consisting of O, S, Se, Te, C, N, P, As, Sb, F, Cl, Br, I, or a mixture thereof. x, y, z and w are independently a decimal number from 0 to 5; x, y, z and w are not simultaneously equal to 0; x and y are not simultaneously equal to 0; z and w may not be simultaneously equal to 0.

In particular, semi-conductive nanoparticles may comprise a material of formula $M_xE_y$, in which M is Zn, Cd, Hg, Cu, Ag, Al, Ga, In, Si, Ge, Pb, Sb or a mixture thereof; and E is O, S, Se, Te, N, P, As or a mixture thereof. x and y are independently a decimal number from 0 to 5, with the proviso that x and y are not 0 at the same time.

In a specific embodiment, the semi-conductive nanoparticles comprise a material selected from the group consisting of CdS, CdSe, CdTe, ZnS, ZnSe, ZnTe, HgS, HgSe, HgTe, HgO, GeS, GeSe, GeTe, SnS, SnSe, SnTe, PbS, PbSe, PbTe, $GeS_2$, $GeSe_2$, $SnS_2$, SnSe2, CuInS2, CuInSe2, AgInS2, AgInSe2, CuS, $Cu_2S$, Ag2S, Ag2Se, Ag2Te, FeS, FeS2, InP, $Cd_3P_2$, $Zn_3P_2$, CdO, ZnO, FeO, $Fe_2O_3$, Fe3O4, $Al_2O_3$, $TiO_2$, MgO, MgS, MgSe, MgTe, AlN, AlP, AlAs, AlSb, GaN, GaP, GaAs, GaSb, InN, InP, InAs, InSb, TIN, TIP, TIAs, TISb, $MoS_2$, PdS, Pd4S, $WS_2$, $CsPbCl_3$, $PbBr_3$, $CsPbBr_3$, $CH_3NH_3PbI_3$, $CH_3NH_3PbCl_3$, $CH_3NH_3PbBr_3$, $CsPbI_3$, $FAPbBr_3$ (where FA stands for formamidinium), or a mixture thereof.

In a preferred configuration of this embodiment, the semi-conductive nanoparticles comprise CdS or ZnSe.

In a preferred configuration of this embodiment, the semi-conductive nanoparticles are ZnSe nanospheres or ZnSe nanoplates.

*Shape*

In this disclosure, semi-conductive nanoparticles may have different shapes, provided that they present a nanometric size leading to confinement of exciton created in the nanoparticle.

Semi-conductive nanoparticles may have nanometric sizes in three dimensions, allowing confinement of excitons in all three spatial dimensions. Such nanoparticles are for instance nanocubes or nanospheres also known as nanodots 1 (or quantum dots) as shown on Figure 2.

Semi-conductive nanoparticles may have a nanometric sizes in two dimensions, the third dimension being larger: excitons are confined in two spatial dimensions. Such nanoparticles are for instance nanorods, nanowires or nanorings. Such nanoparticles may be referred as 1D nanoparticles.

Semi-conductive nanoparticles may have a nanometric size in one dimension, the other two dimensions being larger: excitons are confined in one spatial dimension only. Such nanoparticles are for instance nanoplates 2 (also called nanoplatelets) as shown on Figure 2, nanosheets, nanoribbons or nanodisks. Such nanoparticles may be referred as 2D nanoparticles.

According to one embodiment, the semi-conductive nanoparticles comprise at least 1%, 5%, 10%, 15%, 20%, 25%, 30%, 35%, 40%, 45%, 50%, 55%, 60%, 65%, 70%, 75%, 80%, 85%, 90%, 95%, or 100% of semiconductor nanoplates.

According to one embodiment, the semi-conductive nanoparticles comprise at least 1%, 5%, 10%, 15%, 20%, 25%, 30%, 35%, 40%, 45%, 50%, 55%, 60%, 65%, 70%, 75%, 80%, 85%, 90%, 95%, or 100% of semiconductor nanorods.

The exact shape of semi-conductive particles defines confinement properties; then electronic and optical properties depending on composition of semi-conductive particle, in particular the band gap, then $\lambda_{cut}$. It has been also observed that nanoparticles with a nanometric size in one dimension, especially nanoplates, present a sharper decreasing zone as compared to nanoparticles with other shapes. Indeed, width of decreasing zone is enlarged if nanometric size of nanoparticles fluctuates around a mean value. When nanometric size is controlled in only one dimension, *i.e.* for nanoplates, by a strict number of atomic layers, thickness fluctuations are almost null and transition between absorbing and non-absorbing state is very sharp. This leads to particularly effective light filters. In addition, semi-conductive particles are mineral materials able to withstand conditions in which organic light absorbers are degraded.

*Structure*

In an embodiment, semi-conductive nanoparticles are homostructures. By homostructure, it is meant that the nanoparticle is homogenous and has the same local composition in all its volume. In other words, such semi-conductive nanoparticles are core nanoparticles, as opposed to "core/shell" or "core/crown" nanoparticles, *i.e.* do not comprise a shell or a crown made of a different material than the core. This is advantageous as, adding a shell or crown on a nanoparticle may lead to a less abrupt transition between light absorption/transmission regimes.

In an alternative embodiment, semi-conductive nanoparticles are heterostructures. By heterostructure, it is meant that the nanoparticle is comprised of several sub-volumes, each sub-volume having a different composition from neighbouring sub-volumes. In a particular embodiment, all sub-volumes have a composition defined by formula (I) disclosed above, with different parameters, *i.e.* elemental composition and stoichiometry.

Example of heterostructure are core/shell nanoparticles as shown on Figure 2, the core having any shape disclosed above: nanosphere 11 or 44, nanoplate 33. A shell is a layer covering totally or partially the core: nanosphere 12, nanoplate 34 or 45. A particular example of core/shell heterostructure is a multi-layered structure comprising a core and several successive shells: nanospheres 12 and 13, nanoplates 34 and 35. For convenience, these multi-layered heterostructures are named core/shell hereafter. Core and shell may have the same shape - sphere 11 in sphere 12 for example - or not - dot 44 in plate 45 for instance.

Another example of heterostructure are core/crown nanoparticles as shown on Figure 2, the core having any shape disclosed above. A crown 23 is a band of material disposed on the periphery of the core 22 - here a nanoplate. This heterostructure is particularly useful with cores being nanoplates and crown disposed on the edges of the nanoplate.

Figure 2 shows clear boundaries between core on one hand and shell or crown on the other hand. Heterostructures also enclose structures in which composition varies continuously from core to shell/crown: there is no precise boundary between core and shell/crown but properties in centre of the core are different from properties on the outer boundary of shell/crown.

In an advantageous embodiment, semi-conductive nanoparticles have a largest dimension below 500 nm, in particular below 300 nm, ideally below 200 nm or below 100 nm. Semi-conductive nanoparticles of small size do not induce light scattering when dispersed in a material having a different refractive index.

In a specific configuration of the previous embodiment, the spherical semi-conductive nanoparticles have a mean diameter ranging from 1 nm to 50 nm, preferably from 2 nm to 25 nm, more preferably from 2 nm to 10 nm, even more preferably from 4 nm to 8 nm.

In a specific configuration of the previous embodiment, semi-conductive nanoparticles have a mean thickness ranging from 0.1 nm to 20 nm, preferably from 0.5 nm to 10 nm, more preferably from 0.5 nm to 2.5 nm, a mean width ranging from 5 nm to 100 nm, preferably from 10 nm to 50 nm, more preferably from 10 nm to 30 nm, and/or a mean length ranging from 5 nm to 100 nm, preferably from 10 nm to 50 nm, more preferably from 10 nm to 30 nm.

Wavelength $\lambda_{cut}$ of ZnSe nanospheres and ZnSe nanoplates described in Table 1 (lines 7 and 8) ranges from 400 nm to 480 nm after ligand exchange, as disclosed in the examples of the present disclosure. Table 1 below discloses various semi-conducting nanoparticles suitable for use in this disclosure.

Table 1

| | Shape | Homo/Hetero structure | Dimensions (nm) | Composition - formula (I) | | | | $\lambda_{cut}$ (nm) |
|---|---|---|---|---|---|---|---|---|
| | | | | Mx | Qy | Ez | Aw | |
| 1 | Sphere | Homo | 2.8 | Cd 1 | - | Se 1 | - | 500 |
| 2 | Plate | Homo | 1.2*15*25 | Cd 1 | - | S 1 | - | 418 |
| 3 | Plate | Core/Crown | Core: 1.2*15*15<br>Crown : 1.2*20*20 | Cd 1<br>Cd 1 | -<br>- | Se 1<br>S 1 | -<br>- | 407 |
| 4 | Plate | Core(Plate)/Shell | Core: 1.2*10*15<br>Shell: 3*15*20 | Cd 1<br>Zn 1 | -<br>- | Se 1<br>S 1 | -<br>- | 602 |
| 5 | Plate | Core(gradient)/Shell (Dot in Plate) | Core : gradient<br>Shell: 1.2*15*15 | Cd 1<br>Cd 1 | -<br>- | Se 0.5 | S 0.5<br>S 1 | 430 |
| 6 | Plate | Core(Plate)/Shell | Core: 1.2*10*15<br>Shell: 3*15*20 | Cd 1<br>Cd 0.1 | -<br>Zn 0.9 | Se 0.3<br>S 1 | S 0.7<br>- | 478 |
| 7 | Sphere | Homo | 5.8 | Zn 1 | - | Se 1 | - | 387 |
| 8 | Plate | Homo | 1.9*15*30 | Zn 1 | - | Se 1 | - | 382 |

In one embodiment, the semi-conductive nanoparticles are capped with an organic layer, an inorganic layer or a mixture thereof, and/or encapsulated in an inorganic matrix.

In an embodiment, semi-conductive nanoparticles are capped with organic compounds or inorganic compounds (referred as capping compounds), said organic or inorganic compounds forming an organic or inorganic layer at the surface of each nanoparticle. By capped, it is meant that organic compounds are adsorbed or absorbed on the surface of the semi-conductive nanoparticle. Capping compounds provide several advantages. In particular, capping agent may behave as dispersing agents, avoiding semi-conductive nanoparticles agglomeration in polymerizable composition or during polymerization. Besides, capping agents may influence optical properties of semi-conductive nanoparticles as they modify boundary conditions of nanoparticles: $\lambda_{cut}$ may be adjusted by selection of capping compounds.

Suitable capping compounds are ligands comprising at least one chemical moiety $M_A$ having an affinity to the surface of the semi-conductive nanoparticle, by any kind of intermolecular interactions.

In particular, $M_A$ may have an affinity for a metal element present at the surface of the semi-conductive nanoparticle. $M_A$ may be a thiol, a dithiol, an imidazole, a catechol, a pyridine, a pyrrole, a thiophene, a thiazole, a pyrazine, a carboxylic acid or carboxylate, a naphthyridine, a phosphine, a phosphine oxide, a phenol, a primary amine, a secondary amine, a tertiary amine, a quaternary amine or an aromatic amine.

Alternatively, $M_A$ may have an affinity for a non-metal element selected from the group of O, S, Se, Te, C, N, P, As, Sb, F, Cl, Br, I present at the surface of the semi-conductive nanoparticle. $M_A$ may be an imidazole, a pyridine, a pyrrole, a thiazole, a pyrazine, a naphthyridine, a phosphine, a phosphine oxide, a primary amine, a secondary amine, a tertiary amine, a quaternary amine or an aromatic amine.

Ligands may comprise several chemical moieties $M_A$, identical or different. Ligands may be a polymer having chemical moieties $M_A$, identical or different, as pending groups along the polymer backbone or repeated groups in the polymer backbone.

Example of suitable inorganic caping compounds are inorganic ligands such as $S^{2-}$, $HS^-$, $Se^{2-}$, $Te^{2-}$, $OH^-$, $BF_4^-$, $PF_6^-$, $Cl^-$, $Br^-$, $I^-$, $As_2Se_3$, $Sb_2S_3$, $Sb_2Te_3$, $Sb_2Se_3$, $As_2S_3$ or a mixture thereof.

In an embodiment illustrated in figures 5A-H, semi-conductive nanoparticles are dispersed in a specific location within the contact lens. In a specific configuration of this embodiment, said nanoparticles are dispersed substantially at the average center of the contact lens (figures 5C-D), *i.e.* nanoparticles are located within an area extending from the average center of the contact lens to at least 50% of the radius of said contact lens. In another configuration, said nanoparticles are located at the periphery of the contact lens (figures 5E-F), forming a ring. In another configuration, said nanoparticles are dispersed in the polymeric matrix in a plurality of concentric rings (figures 5G-H).

In an embodiment, semi-conductive nanoparticles are encapsulated within a matrix, forming capsules. By encapsulated, it is meant that semi-conductive nanoparticles are dispersed within an encapsulating material so that the encapsulating material covers all surface of semi-conductive nanoparticles. In other words, encapsulating material forms a barrier around semi-conductive nanoparticles. Such a barrier as several advantages. In particular, semi-conductive nanoparticles may be protected against chemicals, e.g. moisture, oxidants. Besides, semi-conductive nanoparticles that are not dispersible in a medium may be encapsulated in a material whose compatibility with said medium is good: the barrier behaves as a compatibilization agent. Last, encapsulated semi-conductive nanoparticles may be under the form of a powder dispersible in a medium instead of a dispersion in a solvent, thereby providing with easier handling in current processes.

Encapsulating material may be organic, in particular organic polymers. Suitable organic polymers are polyacrylates; polymethacrylates; polyacrylamides; polyamides; polyesters; polyethers; polyoelfins; polysaccharides; polyurethanes (or polycarbamates), polystyrenes; polyacrylonitrile-butadienestyrene (ABS); polycarbonate; poly(styrene acrylonitrile); vinyl polymers such as polyvinyl chloride; polyvinyl alcohol, polyvinyl acetate, polyvinylpyrrolidone, polyvinyl pyridine, polyvinylimidazole; poly(p-phenylene oxide); polysulfone; polyethersulfone; polyethylenimine; polyphenylsulfone; poly(acrylonitrile styrene acrylate); polyepoxides, polythiophenes, polypyrroles; polyanilines; polyaryletherketones; polyfurans; polyimides; polyimidazoles; polyetherimides; polyketones; polynucleotides; polystyrene sulfonates; polyetherimines; polyamic acid; or any combinations and/or derivatives and/or copolymers thereof.

Encapsulating material may be mineral, in particular mineral oxides or mixture of mineral oxides. Suitable mineral oxides are $SiO_2$, $Al_2O_3$, $TiO_2$, $ZrO_2$, FeO, ZnO, MgO, $SnO_2$, $Nb_2O5$, $CeO_2$, BeO, $IrO_2$, CaO, $Sc_2O_3$, $Na_2O$, BaO, $K_2O$, $TeO_2$, MnO, $B_2O_3$, $GeO_2$, $As_2O_3$, $Ta_2O5$, $Li_2O$, SrO, $Y_2O_3$, $HfO_2$, $MoO_2$, $Tc_2O7$, $ReO_2$, $Co_3O4$, OsO, $RhO_2$, $Rh_2O_3$, CdO, HgO, $Tl_2O$, $Ga_2O_3$, $In_2O_3$, $Bi_2O_3$, $Sb_2O_3$, $PoO_2$, $SeO_2$, $Cs_2O$, $La_2O_3$, Pr6O11, $Nd_2O_3$, $La_2O_3$, $Sm_2O_3$, $Eu_2O_3$, $Tb_4O_7$, $Dy_2O_3$, $Ho_2O_3$, $Er_2O_3$, $Tm_2O_3$, $Yb_2O_3$, $Lu_2O_3$, $Gd_2O_3$, or a mixture thereof. Preferred mineral encapsulating materials are $SiO_2$, $Al_2O_3$ and ZnO. In particular, nanoparticles comprising Zn may be encapsulated by ZnO or $SiO_2$ and nanoparticles comprising Cd may be encapsulated by $SiO_2$, $Al_2O_3$ or mixture of $SiO_2$ and $Al_2O_3$.

In an advantageous embodiment, capsules are nanoparticles, with a largest dimension below 500 nm, in particular below 300 nm, ideally below 200 nm. Capsules of small size do not induce light scattering when dispersed in a material having a different refractive index.

The amount of semi-conductive nanoparticles in a capsule according to the present disclosure may be from 1.0 to 90% by weight, in particular from 2.5 to 50% by weight, more particularly from 3.0 to 25% by weight, based on the total weight of the capsule.

In this disclosure, semi-conductive nanoparticles are light absorbing agents. In this disclosure, absorbance of light of wavelength $\lambda_0$ by semi-conductive nanoparticles is defined as follows. Light of wavelength $\lambda_0$ is directed on a 2-millimeter-thick sample comprising semi-conductive nanoparticles. Intensity of directed light is $I_0$. The intensity I of light of wavelength $\lambda_0$ transmitted through the sample is measured. Absorbance light of wavelength $\lambda_0$ for is defined as the decimal logarithm of ratio $I_0/I$. Absorbance of 1 means that 9 out of 10 photons are absorbed by the sample. Absorbance of 0.3 means that 1 out of 2 photons is absorbed by the sample. Due to their electronic structure, semi-conductive nanoparticles behave as high pass filters: absorbance is high for wavelength of high energy, *i.e.* short wavelengths. On the contrary, absorbance for wavelength of low energy, *i.e.* long wavelengths, is low. The transition between both domains of high and low absorbance may be defined by the wavelength $\lambda_{cut}$ defined above.

By proper selection of semi-conductive nanoparticles, $\lambda_{cut}$ may be selected in the UV-visible range, *i.e.* between 350 nm and 780 nm. In an embodiment, $\lambda_{cut}$ is in the visible range, *i.e.* between 380 nm and 780 nm. In a particular embodiment, $\lambda_{cut}$ is in the blue part of visible range, *i.e.* between 400 nm and 480 nm, allowing for attenuation of blue light. In another particular embodiment, $\lambda_{cut}$ is in the yellow-green part of visible range, *i.e.* between 480 nm and 600 nm, allowing for attenuation of blue and yellow light.

In one embodiment, semi-conductive nanoparticles are uniformly dispersed in the polymeric matrix, *i.e.* each nanoparticle is separated from its nearest neighbour nanoparticle by at least 5 nm, preferably 10 nm, more preferably 20 nm, even more preferably 50 nm, most preferably 100 nm. In other words, semi-conductive nanoparticles are not aggregated in the polymeric matrix. Advantageously, the farther away the particles, the lower the diffusion.

In an embodiment, the semi-conductive nanoparticles comprised in the polymeric matrix have the same formula (I), shape and structure.

In another embodiment, the semi-conductive nanoparticles comprised in the polymeric matrix have different formula (I) and/or different shape and/or different structure. In this embodiment, absorbance of the contact lens may be adjusted by superposition of absorbance of each type of semi-conductive nanoparticles, as taught by Beer-Lambert law.

In this embodiment, the decreasing zone of absorbance curve may be more complex, with a first decrease, then an intermediate plateau, then a second decrease as shown on Figure 1.2. Hence, two decreasing zones $D_1$ and $D_2$ may be defined, each decreasing zone having a width of less than 100 nm, preferably less than 50 nm, more preferably less than 40 nm, even preferably less than 30 nm. Besides $A_2$ as defined above still apply and corresponds to two successive decreases.

More than two decreasing zones may be obtained and defined by analogy with the embodiment with two decreasing zones.

Figure 5 shows a contact lens 5 of the invention comprising quantum dots 1 dispersed in a polymeric matrix 51.

*Luminescent semi-conductive nanoparticles*

In an embodiment, semi conductive nanoparticles are luminescent. When irradiated with high energy radiation, an exciton is formed in the nanoparticle, which eventually relax by emission of a photon of energy corresponding to the band-gap of semi-conductive nanoparticle.

A contact lens comprising a luminescent semi-conductive nanoparticle may then be authenticated by presence of a specific light emission.

A mixture of luminescent semi-conductive nanoparticles having different emission wavelength could be used to provide a code of authentication, for industrial purpose, for customer guarantee or for counterfeiting identification of lenses.

Ideally, UV light absorption properties may be brought by non-luminescent semi-conductive nanoparticle and less than 5% weight of luminescent semi-conductive nanoparticle as compared to weight of non-luminescent semi-conductive nanoparticle may be added for authentication purpose.

Besides, luminescent semi-conductive nanoparticles may be used as colour balancing agents. In this case, a part of UV light absorbed by semi-conductive nanoparticles may be emitted in the visible light, especially in the blue-violet range of visible light, so as to balance the yellowing effect induced by absorption of blue-violet light by semi-conductive nanoparticles.

*Polymerizable composition*

The invention also relates to a polymerizable composition for the manufacture of a contact lens, comprising:

a. at least one monomer;
b. at least one catalyst for initiating the polymerization of said monomer; and
c. semi-conductive nanoparticles which are dispersed in said monomer.

wherein the absorbance through a layer of said contact lens is higher than 0.5 for each light wavelength ranging from 350 nm to $\lambda_{cut}$, $\lambda_{cut}$ being in the visible range, preferably in the range from 400 nm to 480 nm, said layer having a thickness ranging from 50 $\mu$m to 250 $\mu$m.

Preferably, the absorbance through a layer of said contact lens is higher than 0.5 for each light wavelength ranging from 350 nm to $\lambda_{cut}$, $\lambda_{cut}$ being in the visible range, preferably in the range from 400 nm to 480 nm, said layer having a thickness of 150 $\mu$m.

The polymerizable composition may further comprise additives in conventional proportions. These additives include stabilizers such as antioxidants, UV light absorbers, light stabilizers, anti-yellowing agents, adhesion promoters, dyes, photochromic agents, pigments, rheology modifiers, lubricants, cross-linking agents, photo-initiators fragrances and pH regulators. They should neither decrease the effectiveness of polymerization nor deteriorate optical properties of the contact lens.

The polymerizable composition may also comprise colour balancing agents. Such additives are intended to lower the residual colour of contact lenses. Typically, dyes and/or pigments are used as colourants. These colourants being absorbent in the complementary colour of blue, a low coloured polymerizable composition is obtained, at the expense of a lowering of lightness. Indeed, polymerizable composition will appear slightly grey, *i.e.* not coloured.

In an advantageous embodiment, the polymerizable composition does not comprise additional UV light absorbers. Indeed, semi-conductive nanoparticles present a significant absorbance for light wavelength ranging from 280 nm to $\lambda_{cut}$. When $\lambda_{cut}$ is selected in the visible range, the whole UV-light ranging from 280 nm to 380 nm is absorbed by semi-conductive nanoparticles and no more UV light absorbers are required in the polymerizable composition.

The polymerizable composition may further comprise a solvent, provided that polymerization is not hindered

by the solvent. Solvent may be selected from polar solvents, like water, an alcohol, or water/alcohol mixtures, preferably an alcohol, e.g. methanol, ethanol, n-propanol, isopropanol, n-butanol, isobutanol, sec-butanol, tert-butanol, n-amylic alcohol, isoamylic alcohol, sec-amylic alcohol, tert-amylic alcohol, 1-ethyl-1-propanol, 2-methyl-1-butanol, 1-methoxy-2-propanol n-hexanol, cyclohexanol, ethyl cellosolve (monoethoxy ethylene glycol), and ethylene glycol.

In an embodiment, the at least one monomer is a hydrophilic monomer.

In an embodiment, the at least one monomer is an acrylate monomer.

In an embodiment, the at least one monomer is a vinylic monomer.

In a specific configuration of those embodiments, the at least one monomer is chosen among HEMA (hydroxyethylmethacrylate), MMA (methylmethacrylate), EGMA (ethylene glycol methacrylate N-dimethyl acrylamide), TEGDMA (tetraethyleneglycol dimethacrylate), PEGA (poly(ethylene glycol) acrylate), DEGEEA (poly(ethylene glycol) ethyl ether acrylate), NGPD (Neopentyl glycol propoxylate diacrylate), PEGDA (poly(ethylene glycol) diacrylate), PETA (pentaerythritol tetraacrylate), glycerol methacrylate, 2-hydroxyethyl methacrylamide, N-dimethyl acrylamide, methacrylic acid, acrylic acid, N-vinyl pyrrolidone N-vinyl lactams (e. g. NVP), N-vinyl-N-methyl acetamide, N-vinyl-N-ethyl acetamide, N-vinyl-N-ethyl formamide, N-vinyl formamide, polyethylene glycol, ethoxylated alkyl glucoside, and ethoxylated bisphenol A, vinyl carbonate, tris-(trimethyl siloxysilyl) propylvinyl carbamate, N-carboxyvinyl ester, dimethysiloxy)di-(silylbutanol) bis-(vinyl carbamate), polyoxazolone, silicone-containing monomer, or a mixture thereof.

Preferred monomers include DMA, HEMA. glycerol methacrylate, 2-hydroxyethyl methacrylamide, N-vinyl pyrrolidone, polyethyleneglycol monomethacrylate, methacrylic acid and acrylic acid with DMA.

In an embodiment, the at least one monomer is a silicone-containing monomer as described hereabove.

In an embodiment, the polymerizable composition results from mixing at least two monomers: a silicone-containing monomer and at least one hydrophilic silicone free monomer. In particular, the polymerizable composition results from mixing a silicone-containing monomer with at least one of the following: mPDMS, methacryloxypropyltris- (trimethylsiloxy) silane, methyl methacrylate, HEMA, DMA, methacrylonitrile, ethyl methacrylate, butyl methacrylate, 2-hydroxypropyl-1-methacrylate, 2-hydroxyethyl methacrylamide, or methacrylic acid.

In an embodiment, the amount of said monomer in the polymerizable composition may be from 20% to 99% by weight, in particular from 50% to 99% by weight, more particularly from 80% to 98% by weight, even more particularly from 90% to 97% by weight, based on the theoretical dry extract of the composition.

By the theoretical dry extract of the composition, it is meant the weight of the composition from which all solvent and volatile moieties released during polymerization are removed.

In an embodiment, examples of catalysts meant for initiating polymerization include but are not limited to: free radical initiators, such as for example peroxodicarbonate, peroxyester, perketal; peroxides, such as for example benzoyl peroxide, methyl ethyl peroxide, methyl ethyl ketone peroxide, di-t-butyl peroxide, lauroyl peroxide, acetyl peroxide, diisopropyl peroxydicarbonate, bis(4-t-butylcyclohexyl) peroxydicarbonate, t-butyl peroxy-2-ethylhexanoate, t-hexyl peroxy-2-ethylhexanoate; azo compounds, such as for example 2,2'-azobisisobutyronitrile, dimethyl 2,2'-azobis(2-methylpropionate), 2,2'-azobis(2-methylbutyronitrile), 2,2'-azobis(2,4-dimethylvaleronitrile), 4,4'-azobis(4-cyanopentanoic acid); organotin compounds, such as for example dimethyltin chloride, dibutyltin chloride; Lewis Acids, such as for example carboxylates of metals such as zinc, titanium, zirconium, tin or magnesium, aluminum acetylacetonate $Al(AcAc)_3$; 4-dimethylaminopyridine; or mixtures thereof.

In an embodiment, the amount of catalyst is 0.1 to 5% by weight, from 0.5 to 5.0% by weight, 0.75 to 2.5% by weight, from 0.5 to 1.5% by weight, from 2.5 to 4.5% by weight, or from 3.0 to 4.0% by weight based on the theoretical dry extract of the polymerizable composition.

The amount of semi-conductive nanoparticles according to the present disclosure may be from 10 ppm to 10% by weight, in particular from 10 ppm to 1% by weight, in particular from 20 ppm to 0.5% by weight, more particularly from 25 ppm to 0.25% by weight, based on the theoretical dry extract of the composition. In this disclosure, the organic material that is used to cap semi-conductive nanoparticles or the material that is used to encapsulate semi-conductive nanoparticles is not included in the amount of semi-conductive nanoparticles. For the sake of clarity, if the optical active aggregates are formed by 30% weight of semi-conductive nanoparticles embedded in 70% weight of surrounding mineral matrix, a contact lens comprising 1% weight of said aggregates of will globally comprises 0.3% weight of semi-conductive nanoparticles, based on the total weight of said contact lens.

In an embodiment, the polymerizable composition may also comprise at least one crosslinking agent, such as for example, a diacrylate-(or divinyl ether-) functionalized ethylene oxide oligomer or monomer, such as, for example, tri (ethylene glycol) dimethacrylate (TEGDMA) tri (ethylene glycol) divinyl ether (TEGDVE), ethylene glycol dimethacrylate (EGDMA), poly(ethylene glycol) diacrylate (PEGDA), poly(ethylene glycol) dimethacrylate (PEGMA), neopentyl glycol propoxylate diacrylate (NGPD), pentaerythritol tetraacrylate (PETA) and/or trimethylene glycol dimethacrylate (TMGDMA). Typically, the crosslinking agents are present in the polymerizable silicone hydrogel composition in relatively small total amounts in the polymerizable composition, such as in an amount ranging from 0.1% to 10% by weight, or from 0.5% to 5% by weight, or from 0.75% to 1.5% by weight, based on the theoretical dry extract of the polymerizable composition.

*Process for the manufacturing of a contact lens*

The invention also relates to a process for the manufacturing of a contact lens as defined hereabove, comprising the steps of:

a. providing a monomer;
b. providing semi-conductive nanoparticles in the form of a powder dispersible within said monomer or in the form of a liquid dispersion of said semi-conductive nanoparticles dispersible within said monomer;
c. providing a catalyst for initiating the polymerization of said monomer; and
d. mixing said monomer, said semi-conductive nanoparticles and said catalyst so as to obtain a polymerizable composition;
e. curing said polymerization composition.

In a first step, a monomer is provided. Said monomer will yield the polymeric matrix. When the contact lens comprises several polymers, corresponding monomers may be provided as a mixture or as separate compositions.
If a cross-linking agent is used, it is provided at the same time than the monomer.
In a second step, semi-conductive nanoparticles are provided. To ensure adequate dispersion in the polymeric matrix, *i.e.* first in monomers then in polymers, semi-conductive nanoparticles may be in the form of a powder dispersible in monomers. Alternatively, semi-conductive nanoparticles may be dispersed in a liquid, such as a solvent, said liquid being dispersible within said monomer.
In a third step, a catalyst is provided.
In a fourth step, monomer, semi-conductive nanoparticles and catalyst are mixed together to yield a homogeneous polymerizable composition. Mixing process may be realized in any order. In some embodiments, polymerization begins as soon as monomers are mixed with catalyst: in this case, catalyst is added last. In some embodiment, at least two monomers having different chemical functions are co-polymerized and polymerization begins as soon as monomers are mixed with catalyst: in this case a composition comprising one monomer and catalyst may be prepared, then mixed last with other monomers.
The polymerizable composition obtained may be stored or used immediately.
In a fifth step, the polymerizable composition is cured.
In an embodiment, prior to curing step, the polymerizable composition may be casted into a mould, then polymerized. Polymerization may be induced by heating, by UV-visible light radiations, by actinic radiations or by a combination thereof: this step is also referred to as curing step. After curing and demoulding, a contact lens is obtained, whose optical surfaces have been defined by mould surfaces and whose optical properties results from composition of polymerizable composition. Curing conditions are well known and allow to obtain lenses without defects, in particular without bubbles and inhomogeneities in refractive index in the volume of the lens.
In an embodiment, the contact lens is formed by spin casting wherein a contact lens is formed in a mold that spins the liquid polymerizable composition, dry casting wherein the liquid polymerizable composition is poured into a concave (female) mold of a specific curve and a back surface mold (male) is compressed into the female mold creating the base curve, or lathe cutting wherein a rod of polymerized composition is cut in small portions, put onto a lathe and cut by a diamond blade to form lenses. During spin casting, curvature of the lens is predetermined by the shape of the mold, amount of polymerizable composition, and spin rate. During dry casting, curvature of the lens is predetermined by the curvature of the molds.
In previous embodiments, nanoparticles may be capped or encapsulated in a matrix as disclosed above.
While various embodiments have been described and illustrated, the detailed description is not to be construed as being limited hereto. Various modifications can be made to the embodiments by those skilled in the art without departing from the true spirit and scope of the disclosure as defined by the claims.

**BRIEF DESCRIPTION OF THE DRAWINGS**

**Figure 1** shows the generic absorbance of a polymeric matrix comprising semi conductive nanoparticles (logarithm scale) as a function of wavelength of light from 350 nm to 780 nm (linear scale): $A(\lambda)$ and the principle of determination of $\lambda_{cut}$.

**Figure 2** is a schematic representation of various shapes (spheres and plates) and structure (homostructure, core/shell, core/crown, dot in plate) of semi-conductive nanoparticles.

**Figure 3** shows the absorbance curves as a function of light wavelength (λ - in nm) of a first population of ZnSe nanospheres NP1 (dotted line), of a second population of ZnSe nanospheres NP2 (semi-dotted line), of a third population of ZnSe nanospheres NP3 (black solid line) and of a fourth population of ZnSe nanospheres NP4 (grey solid line).

**Figure 4** shows the absorbance curves as a function of light wavelength (λ - in nm) of Reference (semi-dotted line), Formulation 1 (grey dotted line), Formulation 2 (grey solid line), Formulation 3 (black dotted line) and Formulation 4 (black solid line).

**Figure 5A** shows a side schematic view of a contact lens **5** according to one embodiment of the invention comprising quantum dots **1** dispersed in a polymeric matrix **51.**

**Figure 5B** shows a top schematic view of a contact lens **5** according to one embodiment of the invention comprising quantum dots **1** dispersed in a polymeric matrix **51.**

**Figure 5C** shows a side schematic view of a contact lens 5 according to one embodiment of the invention comprising quantum dots 1 dispersed in a polymeric matrix 51 and localised at the average center of said contact lens.

Figure 5D shows a top schematic view of a contact lens 5 according to one embodiment of the invention comprising quantum dots 1 dispersed in a polymeric matrix 51 and localised at the average center of said contact lens (grey ring for delimitating the area of dispersion).

Figure 5E shows a side schematic view of a contact lens 5 according to one embodiment of the invention comprising quantum dots 1 dispersed in a polymeric matrix 51 and localised at the periphery of said contact lens, forming a ring.

Figure 5F shows a top schematic view of a contact lens 5 according to one embodiment of the invention comprising quantum dots 1 dispersed in a polymeric matrix 51 and localised at the periphery of said contact lens, forming a ring.

Figure 5G shows a side schematic view of a contact lens 5 according to one embodiment of the invention comprising quantum dots 1 dispersed in a polymeric matrix 51 and localised in said contact lens according to concentric rings.

Figure 5H shows a top schematic view of a contact lens 5 according to one embodiment of the invention comprising quantum dots 1 dispersed in a polymeric matrix 51 and localised in said contact lens according to concentric rings.

EXAMPLES

The present invention is further illustrated by the following examples.

*Example 1: Absorbance of dispersion comprising ZnSe nanospheres*

Semi-conductive nanoparticles of formula ZnSe (hereafter NP1) and having a shape of sphere with diameter of 5.4 ± 0.2 nm were prepared according to procedure known by the man of the art and reported in New J. Chem., 2007, 31, 1843-1852. Specific purification steps included selective precipitation and redispersion in presence of organic ligands as alkylamines. A monodisperse population of ZnSe nanospheres (NP1) was obtained with a coefficient of variation inferior to 20 %.

Similar experiment was conducted to synthesize ZnSe nanospheres, respectively with a diameter of 5.8 ± 0.2 nm (NP2), 6.4 ± 0.2 nm (NP3), 6.8 ± 0.2 nm (NP4) and 7.4 ± 0.2 nm (NP5). The same purification steps were used to obtain monodisperse populations of ZnSe nanospheres with a coefficient of variation inferior to 20 %.

Absorbance curves of the first population of ZnSe nanospheres NP1 (dotted line), second population of ZnSe nanospheres NP2 (semi-dotted line), third population of ZnSe nanospheres NP3 (black solid line) and fourth population of ZnSe nanospheres NP4 (grey solid line) were measured as a function of light wavelength in the UV-visible and are shown on Figure 3. Table 2 summarizes the results obtained for NP1-NP5.

An increase of $\lambda_{max}$ value was observed when increasing the diameter of ZnSe nanospheres.

Table 2: Results obtained for ZnSe populations NP1-NP5.

Table 2

| | NP1 | NP2 | NP3 | NP4 | NP5 |
|---|---|---|---|---|---|
| diameter (nm) | 5.4 ± 0.2 | 5.8 ± 0.2 | 6.4 ± 0.2 | 6.8 ± 0.2 | 7.4 ± 0.2 |
| $\lambda_{max}$ (nm) | 405 | 412 | 419 | 424 | 430 |
| $\lambda(0.9*A_{max})$ (nm) | 409 | 415 | 422 | 428 | 434 |
| $\lambda(0.5*A_{max})$ (nm) | 415 | 420 | 427 | 432 | 438 |
| $\lambda(0.1*A_{max})$ (nm) | 426 | 430 | 435 | 440 | 447 |
| $\|\lambda_{0.5} - \lambda_{0.9}\|$ (nm) | 6 | 5 | 5 | 4 | 4 |
| $\|\lambda_{0.1} - \lambda_{0.9}\|$ (nm) | 17 | 15 | 13 | 12 | 13 |

*Example 2: Synthesis of Monomer 1 - Esterification of PEGMA-DHLA*

The synthesis of Monomer 1 was performed by coupling of a bis-functional linear monomer unit, PEGMA unit (Poly(ethylene glycol) Methacrylate, average molecular mass of 360 Da), with DL-Thioctic acid in equal molar ratios. First, DL-Thioctic acid (30 mmol) was weighted into a round bottom flask. The flask was then sealed, and flushed with nitrogen gas to place the system in an inert environment. Previously degassed and anhydrous THF (tetrahydrofuran, 40 mL) was then slowly injected into the round bottom flask and subsequently, PEGMA (29.5 mmol) was injected dropwise. Benzoyl chloride (29.7 mmol) was then added dropwise and left to homogenize for 10 minutes. In a separate vial, the catalyst sample was prepared by weighting DMAP (4-dimethylaminopyridine, 7.4 mmol), flushing with nitrogen and adding degassed anhydrous THF (20 mL). Triethylamine (57.4 mmol) was added to the DMAP/THF mixture and left to degas. The catalyst sample is then injected into the round bottom flask, drop by drop and then left to mix under stirring for 2 hours. The sample was then extracted with ethyl acetate, washed with water several times, dried with $MgSO_4$ and then concentrated. The sample was then dried overnight under vacuum and stored in fridge until use.

*Example 3: Synthesis of Monomer 2 - Esterification of HEMA-DHLA*

The synthesis of Monomer 2 was performed by coupling a bis-functional linear monomer unit, HEMA (2-hydroxyethyl methacrylate) unit with DL-Thioctic acid in equal molar ratios. First, DL-Thioctic acid (30 mmol) was weighted into a round bottom flask. The flask was then sealed and flushed with nitrogen gas to place the system in an inert environment. Previously degased and anhydrous THF (40 mL) was then slowly injected into the round bottom flask and subsequently, 2-hydroxyethyl methacrylate (29.5 mmol) was injected dropwise. Benzoyl chloride (29.7 mmol) was then added dropwise and left to homogenize for 10 minutes. In a separate vial, a catalyst sample was prepared by weighting DMAP (4-dimethylaminopyridine, 7.4 mmol), flushing with nitrogen and adding degased anhydrous THF (20 mL). Triethylamine (57.4 mmol) was added to the DMAP/THF mixture and left to degas by nitrogen bubbling for 15 minutes. The catalyst sample is then injected into the round bottom flask, drop by drop, and then left to mix under stirring for 2 hours. The sample was then extracted with ethylacetate, washed with water several times, dried with $MgSO_4$ and then concentrated. The sample was then dried overnight under vacuum and stored in fridge until use.

*Example 4: Synthesis of Polymer 1 - Telomerization Polymerization of PEGMA-DHLA + PEGMA*

The formation of Polymer 1 followed a simple telomerization polymerization, using traditional free-radical polymerization with the help of an azo-initiator, and a thiol-based chain-transfer agent.

Polymer 1 was synthesized with the following procedure: Monomer 1 (made in Example 2) was weighted (5.8 mmol) and added into a round bottom flask with Toluene (100 mL). PEGMA (Polyethylene glycol methacrylate) was added into the flask (6 mL) along with 3-mercaptopropionic acid (120 μL). The sample was degased by nitrogen bubbling for 45 minutes, and azo-initiator AIBN (in toluene 0.2M - 6 mL) was injected in said sample. The sample was then heated to 75°C overnight under nitrogren atmosphere. The sample was then cooled to room temperature, concentrated, dispersed in a minimum of dichloromethane and precipitated into cold diethylether. The waxy liquid was then collected and lyophilized overnight to recover the final product.

*Example 5: Synthesis of Polymer 2 - Telomerization Polymerization of HEMA-DHLA + HEMA*

The formation of Polymer 2 followed a simple telomerization polymerization, using traditional free-radical polymerization with the help of an azo-initiator, and a thiol-based chain-transfer agent.

Polymer 2 was synthesized with the following procedure: Monomer 2 (made in Example 3) was weighted (5.8 mmol) and added into a round bottom flask with Toluene (100 mL). 2-hydroxyethyl methacrylate (HEMA) was added into the flask (2.2 mL) along with 3-mercaptopropionic acid (120 μL). The sample was degased by nitrogen bubbling for 45 minutes, and azo-initiator AIBN (in toluene 0.2M - 6 mL) was injected with a syringe. The sample was heated to 75°C overnight under nitrogen atmosphere. The sample was then cooled to room temperature, concentrated, dispersed in a minimum of dichloromethane and precipitated into cold diethylether. The waxy liquid was then collected and lyophilized overnight to recover the final product.

*Example 6: Semi-conductive nanoparticles-MPA ligand exchange*

Nanoparticles from Example 1, typically NP1, were dispersed in toluene at a concentration of 1% mass with 8 mL of MPA (3-mercaptopropanoic acid) and incubated at 50°C for 2 hours and then centrifuged to collect a solid precipitate. The precipitate was then resuspended in DMF (9 mL), reduced with a base (namely Ammonium hydroxide 30 % wt in $H_2O$, 1 mL), sonicated and centrifuged again. The precipitate was washed with ethanol before dispersion in basic water (pH 11) with a final concentration of 1% mass.

*Example 7: Semi-conductive nanoparticles-MPA + Monomer 1*

Nanoparticles from example 6, typically NP1-MPA, were incubated with a concentrated solution of Monomer 1 at a concentration of 10 mg/mL in water overnight at 60°C, then filtrated/concentrated and resuspended into ethanol at a concentration of 10 μM.

*Example 8: Semi-conductive nanoparticles-MPA + Monomer 2*

Nanoparticles from example 6, typically NP1-MPA, were incubated with a concentrated solution of Monomer 2 at a concentration of 10 mg/mL in water overnight at 60°C, then filtrated/concentrated and resuspended into into ethanol at a concentration of 10 μM.

*Example 9: Semi-conductive nanoparticles-MPA + Polymer 1*

Nanoparticles from example 6, typically NP1-MPA, were incubated with a concentrated solution of Polymer 1 (example 4) at a concentration of 10 mg/mL in water overnight at 60°C, then filtrated/concentrated and resuspended into into ethanol at a concentration of 10 μM.

*Example 10: Semi-conductive nanoparticles-MPA + Polymer 2*

Nanoparticles from example 6, typically NP1-MPA, were incubated with a concentrated solution of Polymer 2 at a concentration of 10 mg/mL in water overnight at 60°C, then filtrated/concentrated and resuspended into into ethanol at a concentration of 10 μM.

*Example 11: Silica growth on semi-conductive nanoparticles-MPA*

Nanoparticles from example 6, typically NP1-MPA, were diluted in a solvent mixture of water/ethanol (20/80 % v/v), the concentration of nanoparticles was set to 0.5 % w/w. A controlled ratio of $NH_4OH$ (50 mM) and TEOS (tetraethylorthosilicate) (10 mM) was added to initiate the silica growth. The sample was agitated and mixed for 18 hours before isolation from several washing steps to isolate the silica beads comprising semi-conductive nanoparticles.

*Example 12: Acrylate functionalization of semi-conductive nanoparticles-Silica*

Silica beads from example 11 were mixed with acrylic acid and coupled with the same technique illustrated in Dhimitruka et al. (Organic Letters, 2006, Vol.8, No.1, p. 47-50). The surface of said silica beads were synthetized using a ratio of 1:100:200:25:100 of beads:acrylic acid:triethylamine:DMAP:benzoyl chloride respectively.

*Example 13: Acrylate functionalization of semi-conductive nanoparticles-Silica*

Silica beads from example 11 were mixed with a silane compound that could modify the surface with specific groups. Typically, silica beads from example 11 were dispersed in ethanol with 10,000 x molar ratio of 3-(trimethyoxysilyl)propyl methacrylate. This mixture was left to mix for 24 hours at ambient temperature before isolation via several

ethanol washing steps to produce methacrylate functionalized silica beads.

*Example 14: Mixture of semi-conductive nanoparticles-MPA and PVP*

Nanoparticles from example 6, typically NP4-MPA, were mixed with a dopant mixture of PVP in water (varying molecular weights have been used, ranging from 10kDa, 55kDa and 360 kDa). This experiment leads to PVP surrounding the surface of semiconductive nanoparticles (noted NP4-PVP).

*Example 15: Lens formulations*

Several formulations have been prepared using:

- no semi-conductive nanoparticles (Reference);
- semi-conductive nanoparticles from example 7 (Formulations 1 and 2);
- NP4-PVP from example 14 (Formulations 3 and 4).

Table 3 below lists five prepared formulations, wherein mMAP-PDMS refers to monomethacryloxypropyl terminated polydimethylsiloxane, MAP-PDMS refers to methacryloxypropyl terminated polydimethylsiloxane, NVP refers to N-vinyl pyrrolidone, MMA refers to Methyl Methacrylate and TEGDMA refers to triethylene glycol methacrylate.

After mixing the components listed in Table 3, each lens formulation was purged with nitrogen at room temperature for 30 minutes. The purged lens formulation was then introduced in a mold and cured using UV/visible light for 1 min.

The mold was opened by using a demolding machine. Lenses are pushed onto base curve molds with a push pin and then molds are separated into base curve mold halves and front curve mold halves. The base curve mold halves with a lens thereon are placed in an ultrasonic device. With a certain energy force, a dry state lens is released from mold. Alternatively, lenses can be removed from the base curve mold halves by floating off (*i.e.* soaking in an organic solvent without ultrasonic). The lenses removed from the molds are subjected to an extraction process using water or an organic solvent or a mixture of solvents for at least 30 minutes. Finally, the lens is packaged in lens packages containing a phosphate buffered saline (pH~7.2) and autoclaved at 120°C for about 30-45 minutes.

Absorbance curves of Reference (semi-dotted line), Formulation 1 (grey dotted line), Formulation 2 (grey solid line), Formulation 3 (black dotted line) and Formulation 4 (black solid line) were measured as a function of light wavelength in the UV-visible and are shown on Figure 4.

Table 3: Formulations

Table 3

| | mMAP-PDMS | MAP-PDMS | NVP | MMA | TEGDMA | AIBN | UV-absorber | $\lambda_{cut}$ (nm) |
|---|---|---|---|---|---|---|---|---|
| Reference | 35 w% | 12 w% | 45.3 w% | 7 w% | 0.2 w% | 0.5 w% | 0 | None |
| Formulation 1 | 35 w% | 12 w% | 44.8 w% | 7 w% | 0.2 w% | 0.5 w% | 0.5w% (nanoparticles from example 7) | 405 |
| Formulation 2 | 35 w% | 12 w% | 45 w% | 6,3 w% | 0.2 w% | 0.5 w% | lw% of nanoparticles from example 7 | 405 |
| Formulation 3 | 35 w% | 12 w% | 44.8 w% | 7 w% | 0.2 w% | 0.5 w% | 0.5w% of NP4-PVP from example 14 | 424 |
| Formulation 4 | 35 w% | 12 w% | 45 w% | 6,3 w% | 0.2 w% | 0.5 w% | 1%w% of NP4-PVP from example 14 | 424 |

**Claims**

**1.** A contact lens, comprising:

a. at least one polymeric matrix; and
b. semi-conductive nanoparticles which are dispersed in said polymeric matrix;

wherein the absorbance through a layer of said contact lens is higher than 0.5 for each light wavelength ranging from 350 nm to $\lambda_{cut}$, $\lambda_{cut}$ being in the visible range, preferably in the range from 400 nm to 480 nm, said layer having a thickness ranging from 50 $\mu$m to 250 $\mu$m.

**2.** The contact lens according to claim **1,** wherein the absorbance through a layer of said contact lens is higher than 0.5 for each light wavelength ranging from 350 nm to $\lambda_{cut}$, $\lambda_{cut}$ being in the visible range, preferably in the range from 400 nm to 480 nm, said layer having a thickness of 150 $\mu$m.

**3.** The contact lens according to any one of claim **1** or **2,** wherein the polymeric matrix is obtained by polymerization of at least one monomer in presence of at least one catalyst for initiating the polymerization of said monomer.

**4.** The contact lens according to any one of claim **1** or **2,** wherein the polymeric matrix is a molded polymer.

**5.** The contact lens according to any one of claims **1** to **4,** the polymeric matrix is a flexible material such that said contact lens is a soft contact lens.

**6.** The contact lens according to any one of claims **1** to **5,** wherein said contact lens has at least one of the following features:

- an $O_2$ permeability ranging from 20 x $10^{-11}$ to 150 x $10^{-11}$ ($cm^2$/s) (ml $O_2$/ml x mmHg);
- an average center thickness ranging from 20 $\mu$m to 500 $\mu$m;
- a diameter ranging from 5 mm to 20 mm; and/or
- a base curve ranging from 5 mm to 15 mm.

**7.** The contact lens according to any one of claims **1** to **6,** wherein the polymeric matrix comprises an acrylate polymer, a vinylic polymer, a polyoxyethylene polyol, a polyvinyl carbonate, a polyvinyl carbamate, or a polyoxazolone.

**8.** The contact lens according to claim **7,** wherein the acrylate polymer is selected among polyhydroxyethylmethacrylate, polymethylmethacrylate, poly(ethylene glycol) methacrylate, poly N-dimethyl acrylamide, poly(glycerol methacrylate), polyethyleneglycol dimethacrylate, polytetraethyleneglycol dimethacrylate, poly (2-hydroxyethyl methacrylamide), poly (acrylic acid), poly (methacrylic acid), poly (meth) acrylamide, or poly (acrylamide), poly(ethylene glycol) acrylate, poly di(ethylene glycol) ethyl ether acrylate, neopentyl glycol propoxylate diacrylate, poly(ethylene glycol) diacrylate, poly (pentaerythritol tetraacrylate), or mixture thereof.

**9.** The contact lens according to any one of claims **1** to **8,** wherein the polymeric matrix comprises a silicone hydrogel.

**10.** The contact lens according to any one of claims **1** to **9,** wherein the semi-conductive nanoparticles comprise a material of formula

$$M_xQ_yE_zA_w \qquad (I),$$

wherein:

M is selected from the group consisting of Zn, Cd, Hg, Cu, Ag, Au, Ni, Pd, Pt, Co, Fe, Ru, Os, Mn, Tc, Re, Cr, Mo, W, V, Nd, Ta, Ti, Zr, Hf, Be, Mg, Ca, Sr, Ba, Al, Ga, In, Tl, Si, Ge, Sn, Pb, As, Sb, Bi, Sc, Y, La, Ce, Pr, Nd, Sm, Eu, Gd, Tb, Dy, Ho, Er, Tm, Yb, Cs or a mixture thereof;
Q is selected from the group consisting of Zn, Cd, Hg, Cu, Ag, Au, Ni, Pd, Pt, Co, Fe, Ru, Os, Mn, Tc, Re, Cr, Mo, W, V, Nd, Ta, Ti, Zr, Hf, Be, Mg, Ca, Sr, Ba, Al, Ga, In, Tl, Si, Ge, Sn, Pb, As, Sb, Bi, Sc, Y, La, Ce, Pr, Nd, Sm, Eu, Gd, Tb, Dy, Ho, Er, Tm, Yb, Cs or a mixture thereof;
E is selected from the group consisting of O, S, Se, Te, C, N, P, As, Sb, F, Cl, Br, I, or a mixture thereof;
A is selected from the group consisting of O, S, Se, Te, C, N, P, As, Sb, F, Cl, Br, I, or a mixture thereof; and
x, y, z and w are independently a decimal number from 0 to 5; x, y, z and w are not simultaneously equal to 0; x and y are not simultaneously equal to 0; z and w may not be simultaneously equal to 0.

**11.** The contact lens according to any one of claims 1 to **10,** wherein the semi-conductive nanoparticles are nanospheres, nanoplates or nanorods.

**12.** The contact lens according to any one of claims **1** to **11,** wherein the semi-conductive nanoparticles are core/shell

particles or core/crown particles, the core being a different material from the shell or crown.

**13.** The contact lens according to any one of claims **1** to **12,** wherein the amount of semi-conductive nanoparticles in the contact lens is from 10 ppm to 10 wt%, based on the weight of the contact lens.

**14.** The contact lens according to any one of claims **1** to **13,** wherein the semi-conductive nanoparticles are capped with an organic layer or encapsulated in an inorganic matrix.

**15.** A polymerizable composition for the manufacture of a contact lens, comprising:

a. at least one monomer;
b. at least one catalyst for initiating the polymerization of said monomer; and
c. semi-conductive nanoparticles which are dispersed in said monomer.

wherein the absorbance through a layer of said contact lens is higher than 0.5 for each light wavelength ranging from 350 nm to $\lambda_{cut}$, $\lambda_{cut}$ being in the visible range, preferably in the range from 400 nm to 480 nm, said layer having a thickness ranging from 50 $\mu$m to 250 $\mu$m.

**16.** A process for the manufacturing of the contact lens according to any one of claims **1** to **13,** comprising the steps of:

a. providing a monomer;
b. providing semi-conductive nanoparticles in the form of a powder dispersible within said monomer or in the form of a dispersion of said semi-conductive nanoparticles in a liquid dispersible within said monomer;
c. providing a catalyst for initiating the polymerization of said monomer; and
d. mixing said monomer, said semi-conductive nanoparticles and said catalyst so as to obtain a polymerizable composition;
e. curing said polymerization composition.

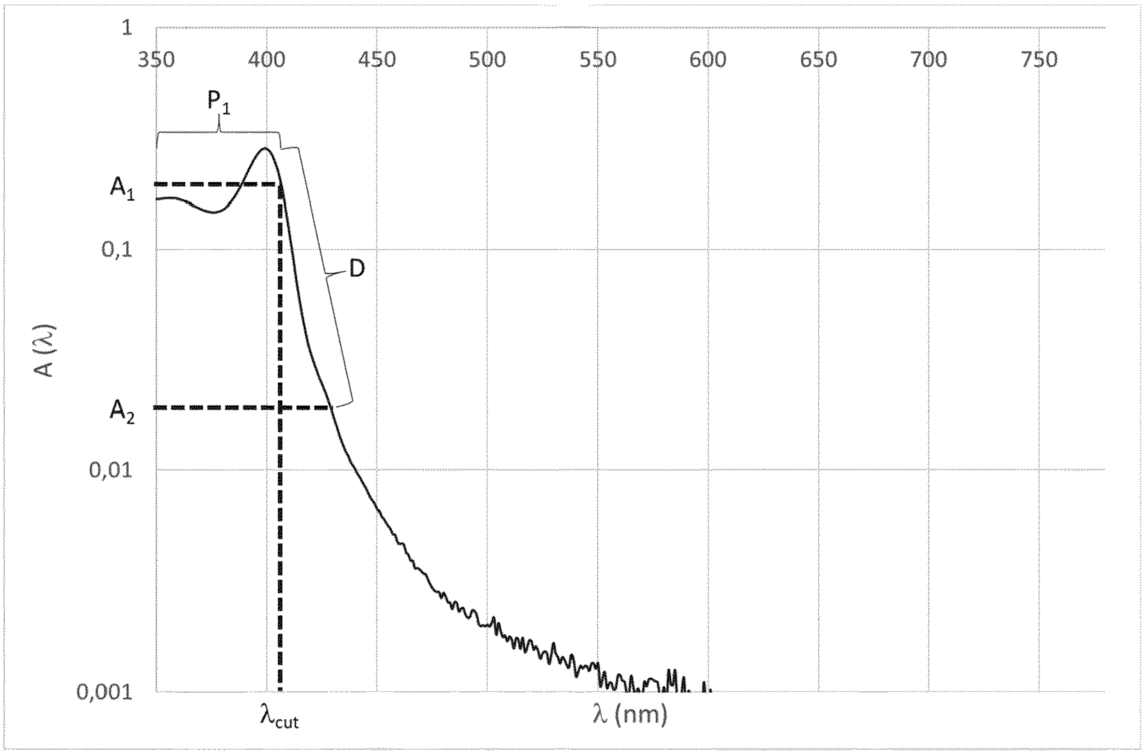
1
350
400
450
500
550
600
650
700
750
P1
A1
0,1
D
A (λ)
A2
0,01
0,001
λcut
λ (nm)

FIG. 1.1

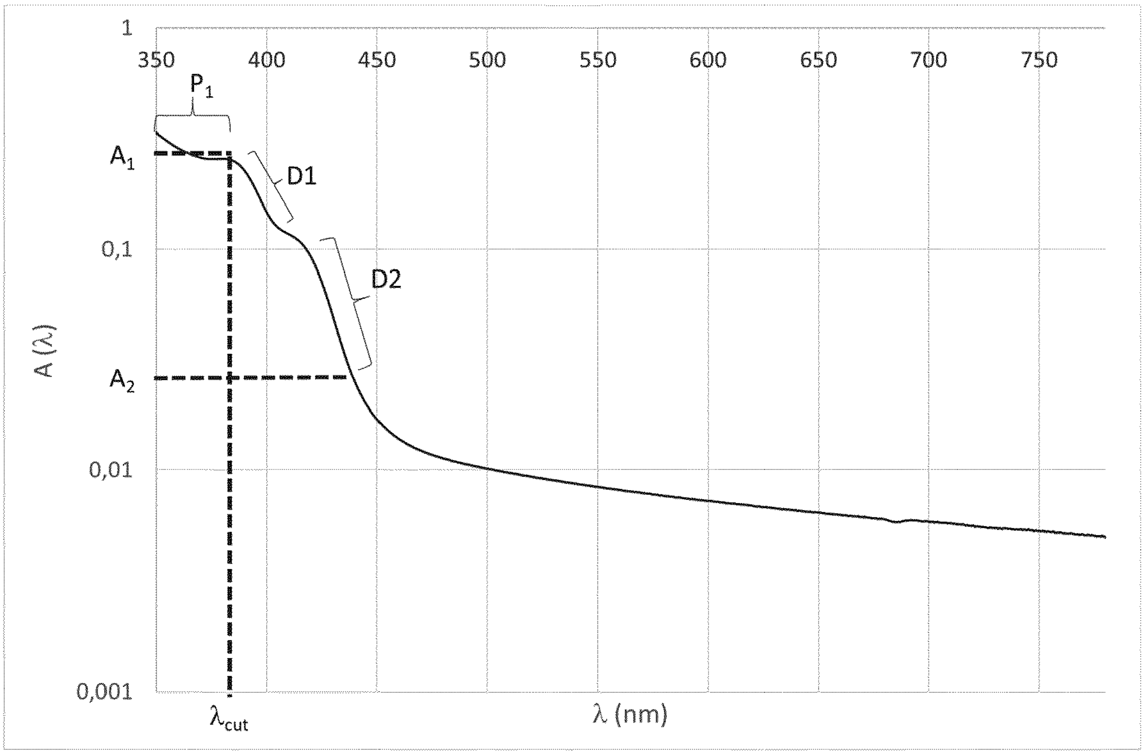
1
350
400
450
500
550
600
650
700
750
P1
A1
D1
0,1
D2
A (λ)
A2
0,01
0,001
λcut
λ (nm)

FIG. 1.2

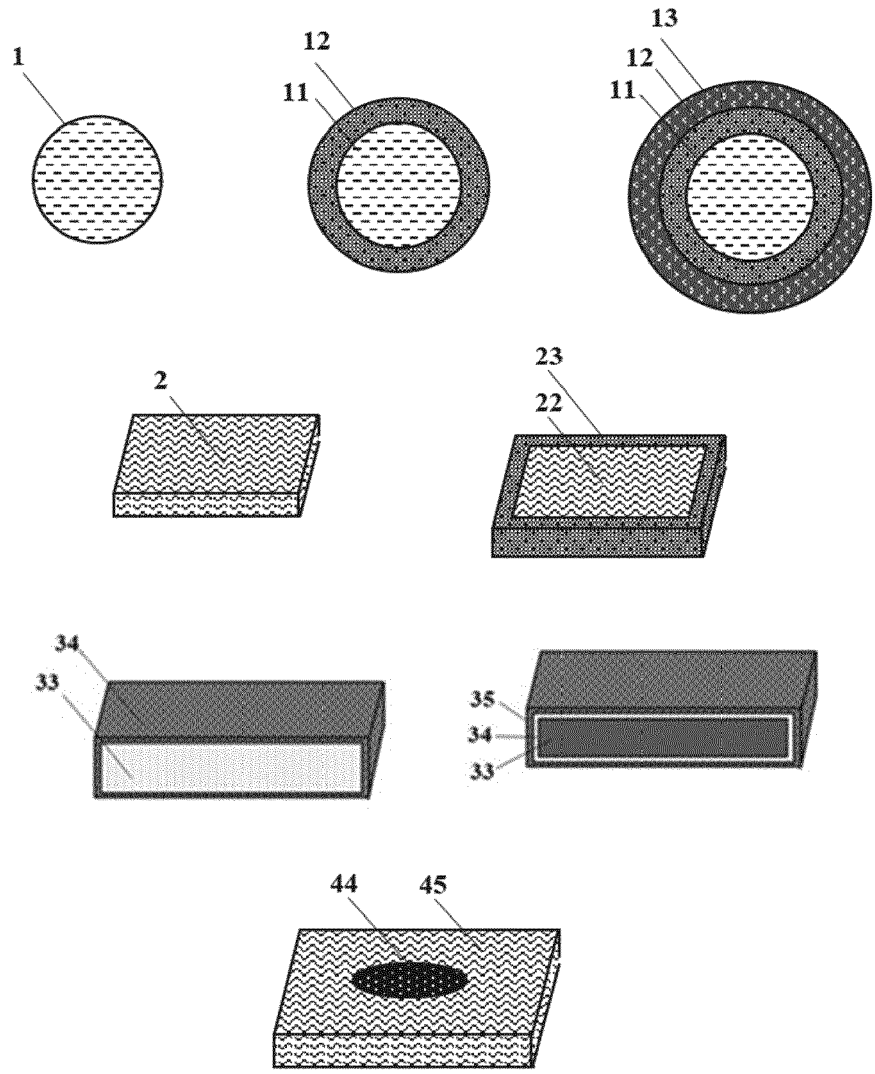


FIG. 2

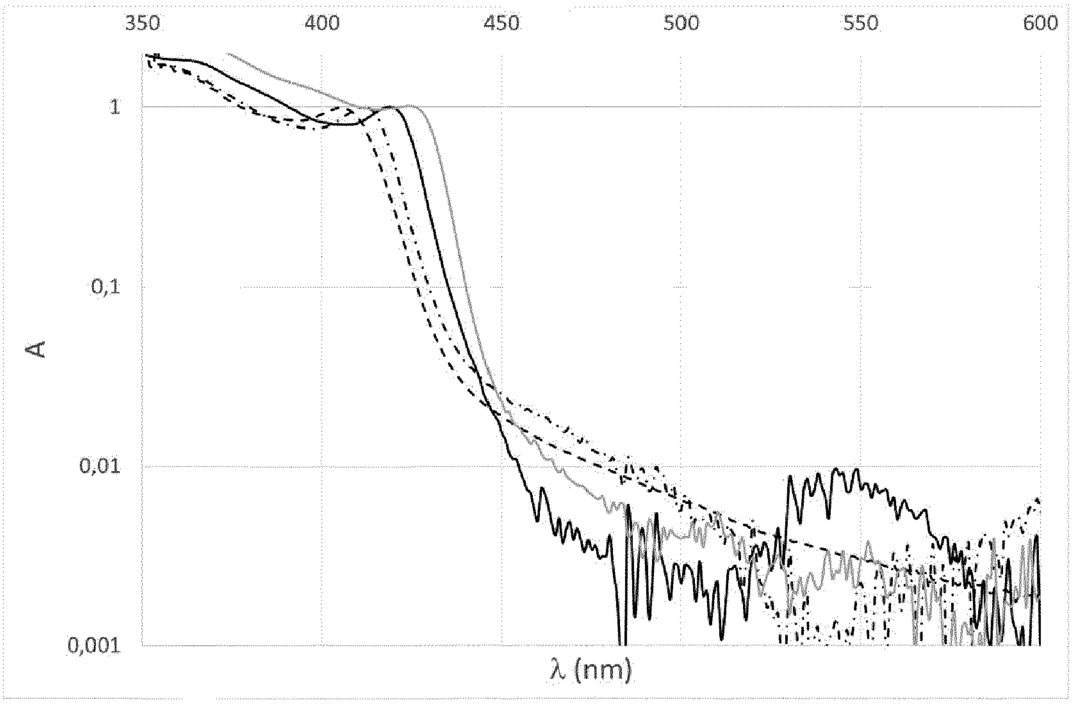


FIG. 3

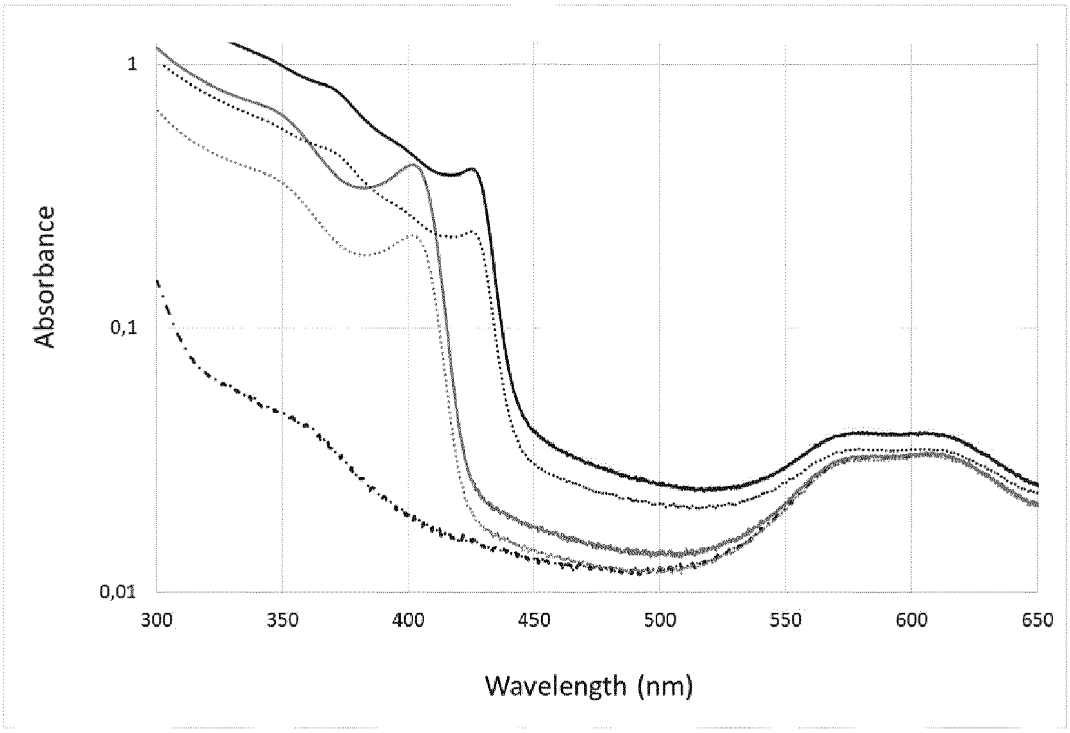
Absorbance
1
0,1
0,01
300
350
400
450
500
550
600
650
Wavelength (nm)

FIG. 4

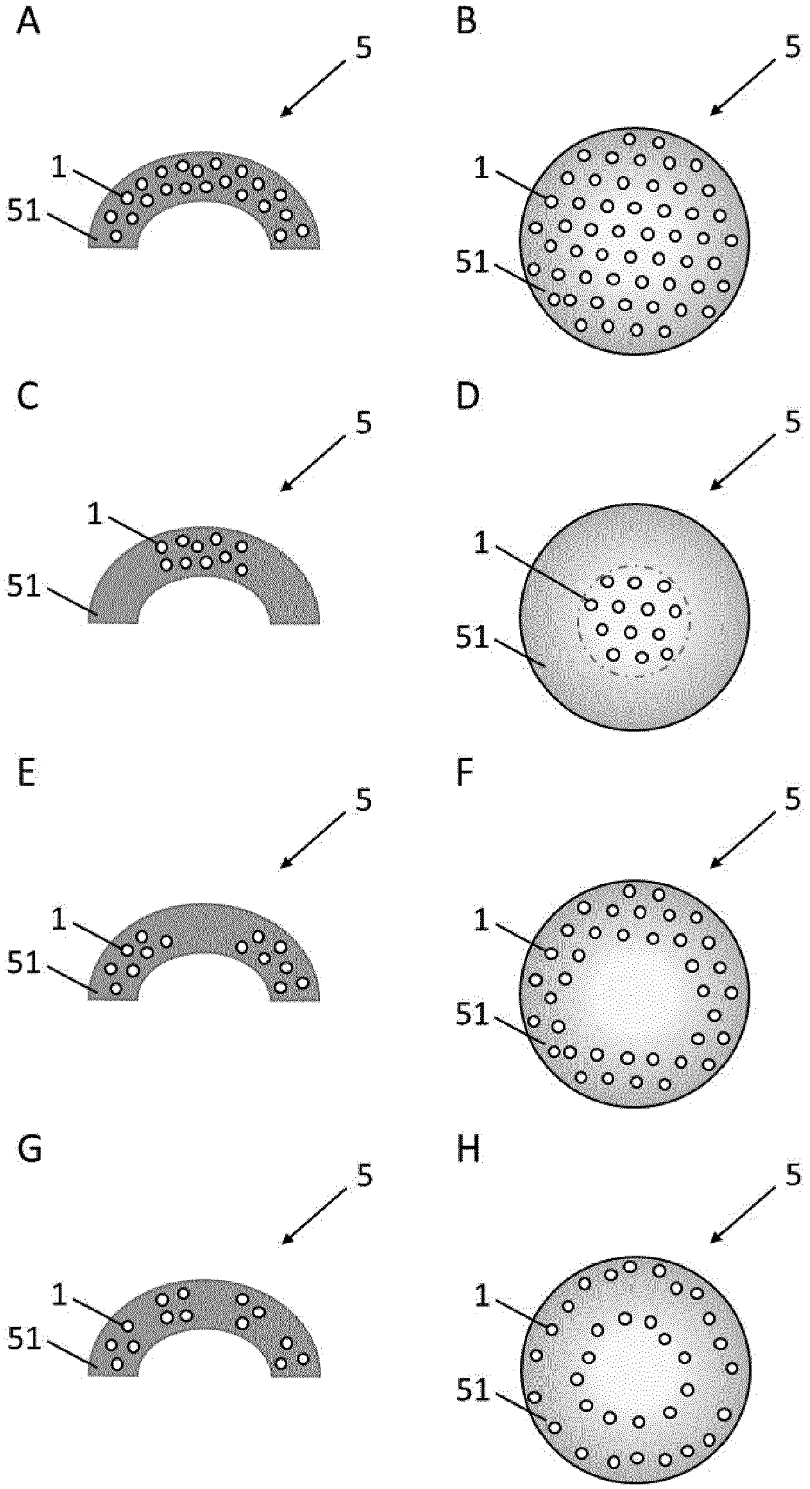


FIG. 5

Europäisches Patentamt
European Patent Office
Office européen des brevets

# EUROPEAN SEARCH REPORT

Application Number
EP 21 30 6059

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | S. LI ET AL: "Bulk Synthesis of Transparent and Homogeneous Polymeric Hybrid Materials with ZnO Quantum Dots and PMMA", ADVANCED MATERIALS, vol. 19, no. 24, 17 December 2007 (2007-12-17), pages 4347-4352, XP055007733, ISSN: 0935-9648, DOI: 10.1002/adma.200700736 | 1,15,16 | INV. G02C7/04 G02C7/10 |
| Y | * page 4349, column 2, paragraph 2 - paragraph 3; figure 2 * * page 4350, column 2, paragraph 2 - paragraph 3 * ----- | 1-16 | |
| Y | US 2010/276638 A1 (LIU MINGJUN [US] ET AL) 4 November 2010 (2010-11-04) * paragraph [0106] * * paragraph [0122] - paragraph [0124] * * paragraph [0141] * * paragraph [0229] * * paragraph [0230] * * paragraph [0267] - paragraph [0268] * ----- | 1-16 | TECHNICAL FIELDS SEARCHED (IPC) G02C B82Y C09K |
| Y | WO 2016/014713 A1 (UNIV UTAH RES FOUND [US]) 28 January 2016 (2016-01-28) * paragraph [0022] * * paragraph [0059] * * paragraph [0068] - paragraph [0069] * ----- | 1-16 | |
| Y | US 9 958 706 B2 (ESSILOR INT [FR]) 1 May 2018 (2018-05-01) * column 2, line 46 - column 3, line 30 * * column 7, line 27 - line 49 * * column 7, line 61 - column 8, line 11 * ----- -/-- | 1-9 | |

1 The present search report has been drawn up for all claims

| Place of search | Date of completion of the search | Examiner |
|---|---|---|
| Munich | 14 January 2022 | Stadlmeyer, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 21 30 6059

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 109 422 244 A (UNIV SCIENCE & TECHNOLOGY CHINA) 5 March 2019 (2019-03-05) * paragraph [0028]; figures 3,4 * ----- | 1-9 | |
| Y | US 2014/220352 A1 (GROSS NOAM [IL] ET AL) 7 August 2014 (2014-08-07) * paragraph [0002] * * paragraph [0007] * * paragraph [0009] * * paragraph [0013] - paragraph [0014] * ----- | 1-9 | |
| Y | WO 2021/023656 A1 (NEXDOT [FR]) 11 February 2021 (2021-02-11) * page 3, line 9 - line 21 * ----- | 10-14 | |
| Y | WO 2021/023655 A1 (NEXDOT [FR]) 11 February 2021 (2021-02-11) * page 1, line 23 - page 3, line 16 * ----- | 10-14 | |
| Y | WO 2020/216949 A1 (NEXDOT [FR]) 29 October 2020 (2020-10-29) * page 3, line 10 - line 29 * * page 4, line 2 - line 9 * ----- | 10-14 | TECHNICAL FIELDS SEARCHED (IPC) |
| A | US 2015/138661 A1 (BLAIR STEVEN M [US] ET AL) 21 May 2015 (2015-05-21) * paragraph [0036] * * paragraph [0044] - paragraph [0045] * ----- | 1-16 | |
| A | US 2020/133027 A1 (GALLAS JAMES M [US] ET AL) 30 April 2020 (2020-04-30) * paragraph [0002] * ----- | 1 | |

1 The present search report has been drawn up for all claims

| Place of search | Date of completion of the search | Examiner |
|---|---|---|
| Munich | 14 January 2022 | Stadlmeyer, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO. EP 21 30 6059

This annex lists the patent family members relating to the patent documents cited in the above-mentioned European search report. The members are as contained in the European Patent Office EDP file on
The European Patent Office is in no way liable for these particulars which are merely given for the purpose of information.

14-01-2022

| Patent document cited in search report | Publication date | Patent family member(s) | Publication date |
|---|---|---|---|
| US 2010276638 A1 | 04-11-2010 | CN 102656233 A | 05-09-2012 |
| | | CN 104387772 A | 04-03-2015 |
| | | EP 2424941 A2 | 07-03-2012 |
| | | JP 6072872 B2 | 01-02-2017 |
| | | JP 6236202 B2 | 22-11-2017 |
| | | JP 2012525467 A | 22-10-2012 |
| | | JP 2016028152 A | 25-02-2016 |
| | | KR 20120035152 A | 13-04-2012 |
| | | US 2010276638 A1 | 04-11-2010 |
| | | US 2013043433 A1 | 21-02-2013 |
| | | US 2014151600 A1 | 05-06-2014 |
| | | US 2015166342 A1 | 18-06-2015 |
| | | WO 2010126606 A2 | 04-11-2010 |
| WO 2016014713 A1 | 28-01-2016 | EP 3171939 A1 | 31-05-2017 |
| | | JP 2017533449 A | 09-11-2017 |
| | | JP 2020190749 A | 26-11-2020 |
| | | WO 2016014713 A1 | 28-01-2016 |
| US 9958706 B2 | 01-05-2018 | CN 106066503 A | 02-11-2016 |
| | | EP 3086164 A1 | 26-10-2016 |
| | | EP 3086165 A1 | 26-10-2016 |
| | | US 2016313573 A1 | 27-10-2016 |
| CN 109422244 A | 05-03-2019 | CN 109421485 A | 05-03-2019 |
| | | CN 109422244 A | 05-03-2019 |
| | | CN 109422891 A | 05-03-2019 |
| | | CN 109424306 A | 05-03-2019 |
| | | CN 109427241 A | 05-03-2019 |
| US 2014220352 A1 | 07-08-2014 | EP 2816380 A2 | 24-12-2014 |
| | | US 2014220352 A1 | 07-08-2014 |
| WO 2021023656 A1 | 11-02-2021 | NONE | |
| WO 2021023655 A1 | 11-02-2021 | NONE | |
| WO 2020216949 A1 | 29-10-2020 | NONE | |
| US 2015138661 A1 | 21-05-2015 | EP 3068342 A1 | 21-09-2016 |
| | | US 2015138661 A1 | 21-05-2015 |
| US 2020133027 A1 | 30-04-2020 | US 2015017109 A1 | 15-01-2015 |
| | | US 2017299897 A1 | 19-10-2017 |
| | | US 2020133027 A1 | 30-04-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *New J. Chem.,* 2007, vol. 31, 1843-1852
- **DHIMITRUKA et al.** *Organic Letters,* 2006, vol. 8 (1), 47-50